# EUROPEAN PATENT APPLICATION

(11) **EP 4 604 613 A1**
(43) Date of publication of application: **20.08.2025**
(21) Application number: 23881614.4
(22) Date of filing: 08.10.2023
(51) Int. Cl.: H04W 36/00

(54) **COMMUNICATION METHOD, SYSTEM, STORAGE MEDIUM, AND PROGRAM PRODUCT**

(30) Priority: 25.10.2022 CN 202211314266
(71) Applicant: Huawei Technologies Co., Ltd., Shenzhen, Guangdong 518129 (CN)
(72) Inventor: YU, Youyang, Shenzhen, Guangdong 518129 (CN)
(74) Representative: Maiwald GmbH
(86) International application number: PCT/CN2023/123382
(87) International publication number: WO 2024/088035

(57) **Abstract**

Embodiments of this disclosure provide a communication method, a network device, a storage medium, and a program product. The method may include: A network device of a core network receives an access request from a non-3rd generation partnership project 3GPP-technology-based access point, where the access request is used to access a terminal device connected to the non-3GPP access point to the core network; the network device performs authentication on the terminal device based on the access request; and if determining that the authentication succeeds, the network device sends a connection identifier to a non-3GPP access device, where the connection identifier is used to determine an L2 or L3 connection between the non-3GPP access point and the non-3GPP access device. In embodiments of this disclosure, the terminal device can access the core network without a non-3GPP access gateway.

## Description

### TECHNICAL FIELD

This application relates to the communication field, and more specifically, to a communication method, a network device, a computer-readable storage medium, and a computer program product.

### BACKGROUND

To face challenges of wireless broadband technologies and maintain a leading edge of a 3rd generation partnership project (3GPP) network, the 3GPP standard organization formulated a next generation mobile communication network architecture (NGS), referred to as a 5G network architecture, at the end of 2016. The architecture not only supports access to a core network side (5GC) by using a radio technology (for example, long term evolution LTE or a 5G access network 5G RAN) defined by the 3GPP standard organization, but also supports access to the core network side by using a non-3GPP (non-3GPP) access technology via a non-3GPP interworking function (N3IWF) or a next generation access gateway (ngPDG). A core network function is divided into a user plane network element function (UPF) and a control plane network element function (CP). The UPF is mainly responsible for data packet forwarding, quality of service (QoS) control, charging information statistics collection, and the like. The CP is mainly responsible for user registration and authentication, mobility management, and delivering a data packet forwarding policy, a QoS control policy, and the like to the UPF, and may be further divided into an access and mobility management function (AMF) and a session management function (SMF). Specifically, the AMF is responsible for a registration procedure during user access and location management during user movement. The SMF is responsible for establishing a corresponding session connection on a network side when a user initiates a service, providing a specific service for the user, and in particular, delivering a data packet forwarding policy, a QoS policy, and the like to the UPF through an NG4 interface between the SMF and the UPF. An authentication server function (AUSF) is mainly responsible for performing authentication on user equipment and determining validity of the user equipment. A unified user data management (UDM) is mainly configured to store subscription data of the user equipment. A policy control function (PCF) is mainly configured to deliver a service-related policy to the AMF or the SMF. An application function (AF) sends an application-related requirement to the PCF, so that the PCF generates a corresponding policy. A data network (DN) provides a service for the user equipment, for example, provides a mobile operator service, an internet service, or a third-party service.

When a 5G core network supports untrusted non-3GPP (N3G) access, the user equipment accesses the 5G core network by using an untrusted non-3GPP access gateway (N3IWF), and the untrusted non-3GPP access network may be an untrusted wireless local area network (WLAN) access network.

### SUMMARY

This application provides a communication solution, to support a terminal device in accessing a core network from a non-3GPP-technology-based access point via a network device of the core network without a non-3GPP access gateway.

According to a first aspect of this application, a communication method is provided. The method includes: A network device of a core network receives an access request from a non-3rd generation partnership project 3GPP-technology-based access point, where the access request is used to enable a terminal device connected to the non-3GPP access point to access the core network; the network device performs authentication on the terminal device based on the access request; and if the network device determines that the authentication succeeds, the network device sends a connection identifier to a non-3GPP access device, where the connection identifier is used to determine an L2 or L3 connection between the non-3GPP access point and the non-3GPP access device.

According to the method in the first aspect, in a possible implementation, the terminal device accesses the core network without a non-3GPP access gateway.

In some embodiments of the first aspect, the access request includes: an identifier of the terminal device, a medium access control MAC address of the terminal device, an identifier of the non-3GPP access point, and an extensible authentication protocol EAP message. In this way, the network device obtains the foregoing information.

In some embodiments of the first aspect, performing the authentication on the terminal device based on the access request includes: The network device selects, based on the identifier or the MAC address of the terminal device, an authentication server function AUSF associated with the terminal device; and the network device sends, to the AUSF, an authentication request including the EAP message. In this way, the network device may start an authentication process associated with the terminal.

In some embodiments of the first aspect, the method further includes: The network device selects, based on an identifier or a MAC address of the terminal device, a data management function associated with the terminal device; the network device sends a subscription data request to the data management function; and the network device receives subscription data of the terminal device from the data management function. In this way, the network device obtains the subscription data.

In some embodiments of the first aspect, the subscription data includes: the identifier of the terminal device, the MAC address of the terminal device, a service identifier of the terminal device, slice information associated with the terminal device, mobility information of the terminal device, power saving information of the terminal device, an identifier that is of the non-3GPP access device and that corresponds to a service of the terminal device, and policy information corresponding to the service of the terminal device. In this way, the network device obtains the foregoing subscription data.

In some embodiments of the first aspect, the method further includes: If the network device determines that the subscription data does not include the identifier of the non-3GPP access device, the network device sends a query request to a network repository function of the core network, where the query request includes the service identifier of the terminal device; and the network device receives a reply from the network repository function, where the reply includes the identifier that is of the non-3GPP access device and that corresponds to the service identifier. In this way, the network device may obtain required data from the network repository function.

In some embodiments of the first aspect, the method further includes: If the network device determines that the subscription data does not include the policy information or includes only partial policy information, the network device sends a query request to a policy control function of the core network, where the query request includes the service identifier of the terminal device; and the network device receives a reply from the policy control function, where the reply includes the policy information corresponding to the service identifier. In this way, the network device may obtain required data from the network repository function.

In some embodiments of the first aspect, the method further includes: The network device sends a session connection establishment request to the non-3GPP access device; and the network device receives a session establishment success indication from the non-3GPP access device. In this way, the network device may establish a session with the non-3GPP access device.

In some embodiments of the first aspect, the method further includes: The network device determines, based on subscription data, the non-3GPP access device associated with the terminal device. In this way, the network device determines the corresponding non-3GPP access device.

In some embodiments of the first aspect, the session connection establishment request includes: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; and second indication information, indicating the non-3GPP access device to establish a correspondence between an L2 or L3 connection to an access network device and a CP-UP session. In this way, the non-3GPP access device obtains the foregoing information.

In some embodiments of the first aspect, the connection identifier is carried in at least one of the following: the description information of the service flow, the policy information corresponding to the service flow, and the second indication information. In this way, the non-3GPP access device obtains the connection identifier.

In some embodiments of the first aspect, the network device is a first network device, and the method further includes: The first network device sends a registration request used for the terminal device to a second network device. In this way, the terminal device is registered with the second network device.

In some embodiments of the first aspect, the registration request includes: an identifier of the terminal device, a medium access control MAC address of the terminal device, an identifier of the access point, and an authentication success indication of the terminal device. In this way, the second network device obtains the foregoing information.

In some embodiments of the first aspect, the terminal device is registered with the core network by using a 3GPP technology before accessing the core network via the non-3GPP access point. In this way, the terminal device may be registered with the core network from a 3GPP side.

In some embodiments of the first aspect, an authentication request includes a temporary identifier allocated to the terminal device during the registration. In this way, the authentication server function obtains the temporary identifier.

According to a second aspect of this application, a communication method is provided. The method includes: A second network device of a core network obtains, in response to a registration request that is received from a first network device and that is used to register a terminal device connected to a non-3GPP-technology-based access point with the core network, an identifier or a MAC address of the terminal device and an identifier of the non-3GPP access point from the registration request; if the second network device determines, based on the registration request, that authentication on the terminal device succeeds, the second network device obtains subscription data of the terminal device from a user data management function; and the second network device generates a user context of the terminal device, where the context includes the identifier or the MAC address of the terminal device, the identifier of the non-3GPP access point, and the subscription data of the terminal device.

According to the method in the second aspect, in a possible implementation, a registration process of the terminal device may be implemented via the second network device.

In some embodiments of the second aspect, the method further includes: The second network device sends a first request to a third network device; and the third network device establishes a session based on the first request. In this way, the second network device starts a session with the third network device.

In some embodiments of the second aspect, the method further includes: The second network device receives a protocol data unit (PDU) session establishment or update request from a 3rd generation partnership project 3GPP technology access point, where the PDU session establishment or update request includes an indication of a non-3GPP access technology; the second network device sends the PDU session establishment or update request to the third network device by using the first request; and the third network device establishes the session based on the PDU session establishment or update request. In this way, the second network device forwards the PDU session request of the terminal device.

According to a third aspect of this application, a communication method is provided. The method includes: A third network device of a core network receives a first request from a second network device, where the first request includes an identifier or a MAC address of a terminal device and a service identifier of the terminal device, and the terminal device accesses the core network via a non-3GPP technology access point; and the third network device establishes, based on the first request, a connection used for the terminal device to the second network device.

According to the method in the third aspect, in a possible implementation, the third network device and the second network device may establish a connection used for the terminal device.

In some embodiments of the third aspect, the method further includes: The third network device establishes a session connection used for the terminal device to a non-3GPP access device. In this way, the third network device establishes a connection to the non-3GPP access device.

In some embodiments of the third aspect, that the third network device establishes a session connection to a non-3GPP access device includes: The third network device sends a session connection establishment request to the non-3GPP access device; and the third network device receives a session establishment success indication from the non-3GPP access device. In this way, the third network device completes establishing the session connection.

In some embodiments of the third aspect, the session connection establishment request includes at least one of the following: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; second indication information, indicating the non-3GPP access device to establish a correspondence between an L2 or L3 connection to an access network device and a CP-UP session; and third indication information, indicating the non-3GPP access device to establish a correspondence between the L2 or L3 connection to the access network device and a user plane tunnel session with an original non-3GPP access device. In this way, the non-3GPP access device obtains the foregoing information.

In some embodiments of the third aspect, the method further includes: The third network device sends a connection identifier to the non-3GPP access device, where the connection identifier is used to determine an L2 or L3 connection between the non-3GPP access point and the non-3GPP access device, and the connection identifier is carried in at least one of the following: the description information of the service flow, the policy information corresponding to the service flow, the second indication information, and the third indication information. In this way, the non-3GPP access device obtains the connection identifier.

In some embodiments of the third aspect, the method further includes: The third network device receives a PDU session establishment or update request message from the second network device; and the third network device establishes or updates a PDU session based on the message. In this way, the third network device processes the PDU request.

In some embodiments of the third aspect, that the third network device establishes or updates a PDU session based on the message includes: The third network device selects the non-3GPP access device; the third network device creates the session connection to the non-3GPP access device; and the third network device sends a reply message for the message. In this way, the third network device processes the PDU request.

In some embodiments of the third aspect, that the third network device creates the session connection to the non-3GPP access device includes: When the message indicates to update the PDU session, the third network device establishes a tunnel connection between a target non-3GPP access device and an original non-3GPP access device of the PDU session; and when the message indicates to establish a new PDU session, the third network device establishes a session connection between an access point/access control (AP/AC) and the target non-3GPP access device. In this way, the third network device processes the PDU request.

According to a fourth aspect of this application, a communication method is provided. The method includes: A non-3GPP control plane network device of a core network receives a session connection establishment request used for a terminal device from a non-3GPP access device, where the terminal device accesses the core network via a non-3GPP technology access point; and the non-3GPP access device establishes, based on the session connection establishment request, a session connection used for the terminal device to the non-3GPP control plane network device.

According to the method in the fourth aspect, in a possible implementation, a session connection between the non-3GPP access device and the non-3GPP control plane network device may be established.

In some embodiments of the fourth aspect, the session is in one-to-one correspondence with the terminal device or in one-to-one correspondence with a service identifier. In this way, a correspondence between the session and the terminal is implemented.

In some embodiments of the fourth aspect, the session connection establishment request includes: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; second indication information, indicating the non-3GPP access device to establish a correspondence between an L2 or L3 connection to an access network device and a CP-UP session; and third indication information, indicating the non-3GPP access device to establish a correspondence between the L2 or L3 connection to the access network device and a user plane tunnel session with an original non-3GPP access device. In this way, the non-3GPP access device obtains the foregoing information.

In some embodiments of the fourth aspect, when the first indication information and the second indication information do not exist, the non-3GPP access device determines, based on a request, that there is no need to allocate the GTP-U tunnel identifier to the non-3GPP access device, or determines, based on a request, to establish the correspondence between the L2 or L3 connection to the access network device and the CP-UP session. In this way, a problem that the indication information does not exist is processed.

In some embodiments of the fourth aspect, when the first indication information and the third indication information do not exist, the non-3GPP access device determines, based on a request, that there is no need to allocate the GTP-U tunnel identifier to the non-3GPP access device, or determines, based on a request, to establish the correspondence between the L2 or L3 connection to the access network device and the user plane tunnel session with the original non-3GPP access device. In this way, a problem that the indication information does not exist is processed.

In some embodiments of the fourth aspect, the method further includes: The non-3GPP access device receives a connection identifier from the non-3GPP control plane network device, where the connection identifier is used to determine an L2 or L3 connection between the non-3GPP access point and the non-3GPP access device, and the connection identifier is carried in at least one of the following: the description information of the service flow, the policy information corresponding to the service flow, the second indication information, and the third indication information. In this way, the non-3GPP access device obtains the connection identifier.

According to a fifth aspect of this application, a communication method is provided. The method includes: A terminal device sends a core network access request to a non-3GPP control plane network device of a core network via a non-3GPP-technology-based access point; the terminal device obtains an IP address from a user plane function network device of the core network via the non-3GPP access point; the terminal device encapsulates a service data packet based on the IP address; and the terminal device sends the service data packet to the user plane function network device via the non-3GPP access point.

According to the method in the fifth aspect, in a possible implementation, the terminal device may access the core network and send data.

In some embodiments of the fifth aspect, the request includes: an identifier of the terminal device, a medium access control MAC address of the terminal device, an identifier of the access point, and an extensible authentication protocol EAP message. In this way, the foregoing information is sent to the network device.

In some embodiments of the fifth aspect, the terminal device is user equipment UE that supports 3GPP technology access. In this way, the UE may register from a 3GPP side.

In some embodiments of the fifth aspect, the method further includes: The UE sends a PDU session establishment or update request message to a network device of the core network via a 3GPP technology access side, where the message includes an indication of a non-3GPP access technology; and the UE receives a reply message for the message from the network device of the core network. In this way, the terminal device may establish or update the PDU session.

In some embodiments of the fifth aspect, the method further includes: That the terminal device sends the service data packet includes: The terminal device sends the service data packet from a 3GPP technology access side; or the terminal device sends the service data packet from a non-3GPP technology access side. In this way, the terminal device may send data from both sides.

According to a sixth aspect of this application, a communication system is provided. The system includes: an authentication network element, a registration management network element, and a session management network element, where the authentication network element receives an access request from a non-3rd generation partnership project 3GPP-technology-based access point, where the access request is used to enable a terminal device connected to the non-3GPP access point to access a core network; the authentication network element performs authentication on the terminal device based on the access request, and if the authentication network element determines that the authentication succeeds, the session management network element sends a connection identifier to a non-3GPP access device, where the connection identifier is used to determine an L2 or L3 connection between the non-3GPP access point and the non-3GPP access device; and the authentication function network element, the registration management function network element, and the session management function network element are deployed in different network elements or deployed in a same network element.

According to the method in the sixth aspect, in a possible implementation, the terminal device accesses the core network without a non-3GPP access gateway.

In some embodiments of the sixth aspect, the method further includes: The authentication network element sends a registration request to the registration management network element; the registration management network element determines, based on the registration request, that the authentication succeeds; the registration management network element obtains subscription data of the terminal device from a user data management network element; the registration management network element establishes a session to the session management network element; and the session management network element establishes a session connection to the non-3GPP access device. In this way, authentication and registration of the terminal device and connection between the foregoing system and the non-3GPP access device are implemented.

In some embodiments of the sixth aspect, the subscription data includes: an identifier of the terminal device, a MAC address of the terminal device, a service identifier of the terminal device, slice information associated with the terminal device, mobility information of the terminal device, power saving information of the terminal device, an identifier that is of the non-3GPP access device and that corresponds to a service of the terminal device, and policy information corresponding to the service of the terminal device. In this way, the foregoing system obtains the foregoing information.

In some embodiments of the sixth aspect, that the session management network element establishes a session connection to the non-3GPP access device includes: The session management network element sends a session connection establishment request to the non-3GPP access device; and the session management network element receives a session establishment success indication from the non-3GPP access device. In this way, the session management network element is connected to the non-3GPP access device.

In some embodiments of the sixth aspect, the session connection establishment request includes: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; second indication information, indicating the non-3GPP access device to establish a correspondence between an L2 or L3 connection to an access network device and a CP-UP session; and third indication information, indicating the non-3GPP access device to establish a correspondence between the L2 or L3 connection to the access network device and a user plane tunnel session with an original non-3GPP access device. In this way, the non-3GPP access device obtains the foregoing information.

In some embodiments of the sixth aspect, the method further includes: The session management network element sends the connection identifier to the non-3GPP access device, where the connection identifier is used to determine an L2 or L3 connection between the non-3GPP access point and the non-3GPP access device, and the connection identifier is carried in at least one of the following: the description information of the service flow, the policy information corresponding to the service flow, the second indication information, and the third indication information. In this way, the non-3GPP access device obtains the connection identifier.

According to a seventh aspect of this application, a communication apparatus is provided. The apparatus includes at least one processor and at least one memory, where the at least one memory is coupled to the at least one processor and stores instructions for execution by the at least one processor, where when the instructions are executed by the at least one processor, the communication apparatus is enabled to implement operations of the method according to any one of the first aspect to the fifth aspect or any one of embodiments of the first aspect to the fifth aspect.

According to an eighth aspect of this application, a computer-readable storage medium is provided, where the computer-readable storage medium stores instructions, and when the instructions are executed by an electronic device, the electronic device is enabled to implement operations of the method according to any one of the first aspect to the fifth aspect or any one of embodiments of the first aspect to the fifth aspect.

According to a ninth aspect of this application, a computer program product is provided, where the computer program product includes instructions, and when the instructions are executed, operations of the method according to any one of the first aspect to the fifth aspect or any one of embodiments of the first aspect to the fifth aspect are implemented.

According to the foregoing aspects, the terminal device can access the core network without a non-3GPP access gateway.

### BRIEF DESCRIPTION OF DRAWINGS

With reference to accompanying drawings and the following detailed descriptions, features, advantages, and other aspects of implementations of this application become clearer. Several implementations of this application are shown herein by way of example but not limitation. In the accompanying drawings:
FIG. 1 is a block diagram of a communication network in which a possible implementation of this application can be implemented;
FIG. 2 is a signaling interaction diagram of an example communication process according to a possible implementation of this application;
FIG. 3 is a diagram of a system architecture according to a possible implementation of this application;
FIG. 4 is a signaling interaction diagram of an example communication process according to another possible implementation of this application;
FIG. 5 is a diagram of a system architecture according to another possible implementation of this application;
FIG. 6A and FIG. 6B are a signaling interaction diagram of an example communication process according to still another possible implementation of this application;
FIG. 7 is a diagram of a system architecture according to still another possible implementation of this application;
FIG. 8A and FIG. 8B are a signaling interaction diagram of an example communication process according to yet another possible implementation of this application;
FIG. 9 is a flowchart of a communication method according to a possible implementation of this application;
FIG. 10 is a flowchart of a communication method according to another possible implementation of this application;
FIG. 11 is a flowchart of a communication method according to still another possible implementation of this application;
FIG. 12 is a flowchart of a communication method according to yet another possible implementation of this application;
FIG. 13 is a flowchart of a communication method according to still yet another possible implementation of this application; and
FIG. 14 is a simplified block diagram of an example device suitable for implementing a possible implementation of this application.

In the accompanying drawings, same or similar reference numerals indicate same or similar elements.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

Terms used in the following embodiments of this application are merely intended to describe specific embodiments, but are not intended to limit this application. As used in this specification and the claims of this application, singular expressions, "one", "a", "said", "foregoing", "the", or "this", are also intended to include plural expressions unless otherwise clearly indicated to the contrary in the context. It should be further understood that the term "and/or" used in this application refers to and includes any or all possible combinations of one or more listed items.

In the descriptions of embodiments of this application, the term "include" and similar terms thereof should be understood as open inclusion, that is, "including but not limited to". The term "based on" should be understood as "at least partially based on". The term "one embodiment" or "this embodiment" should be understood as "at least one embodiment". It should be understood that expressions such as "first", "second", and "third" are merely intended to indicate that a plurality of objects may be different, but it is not excluded that two objects are the same. The expressions such as "first", "second", and "third" should not be construed as any limitation on embodiments. The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of" means two or more. Other explicit and implicit definitions may also be included below.

An "embodiment" mentioned in this application indicates that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with other embodiments.

To face challenges of wireless broadband technologies and maintain a leading edge of a 3GPP network, the 3GPP standard organization formulated a next generation mobile communication network architecture, referred to as a 5G network architecture, at the end of 2016. The architecture not only supports access to a 5G core network side by using a radio technology defined by the 3GPP standard organization, but also supports access to the core network side by using a non-3GPP access technology via a non-3GPP interworking function (N3IWF) or a next generation access gateway (ngPDG). A core network function is divided into a user plane network element function (UPF) and a control plane network element function (CP). The user plane network element function is mainly responsible for data packet forwarding, QoS control, charging information statistics collection, and the like. The control plane network element is responsible for user registration and authentication, mobility management, and delivering a data packet forwarding policy, a QoS control policy, and the like to a user plane (the UPF), and may be further divided into an access and mobility management function (AMF) and a session management function (SM). Specifically, the AMF is responsible for a registration procedure during user access and location management during user movement. The SMF is responsible for establishing a corresponding session connection on a network side when a user initiates a service, providing a specific service for the user, and in particular, delivering a data packet forwarding policy, a QoS policy, and the like to the UPF through an NG4 interface between the SMF and the UPF. An AUSF is mainly responsible for performing authentication on user equipment and determining validity of the user equipment. A UDM is responsible for unified user data management, and is mainly configured to store subscription data of the user equipment. A PCF is mainly configured to deliver a service-related policy to the AMF or the SMF. An AF sends an application-related requirement to the PCF, so that the PCF generates a corresponding policy. ADN is a data network, and provides a service for the user equipment, for example, provides a mobile operator service, an internet service, or a third-party service.

When a 5G core network supports untrusted non-3GPP (N3G) access, the N3IWF is an untrusted non-3GPP access gateway, and an untrusted non-3GPP access network may be an untrusted WLAN access network. In addition, the 5G core network further supports trusted non-3GPP access and/or wired network access. A trusted non-3GPP network includes a trusted WLAN network, and a wired network includes fixed home network access and the like. A network-side architecture is similar to an untrusted non-3GPP access architecture. The untrusted non-3GPP access gateway is replaced with a trusted WLAN access gateway or a wired network access gateway. An access network device between the UE and the access gateway includes a wireless local area network access point (WLAN AP), a wired network access network device, a switch, a router, and the like. In conclusion, an N3G access technology includes an access technology such as trusted WLAN access, untrusted WLAN access, or wired access. Regardless of the trusted non-3GPP access or the untrusted non-3GPP access, the core network side may be a point-to-point interface protocol, or a service-oriented interface consistent with a service-oriented interface used for a 3GPP access core network architecture may be used.

It can be learned from the architecture of a conventional technology that when accessing the 5GC by using the non-3GPP access technology, a terminal device needs to access the 5GC via a non-3GPP access gateway. This means that the terminal device needs to support an interaction protocol between the terminal device and the non-3GPP access gateway, and an operator further needs to synchronously deploy the non-3GPP access gateway after deploying a non-3GPP access point. This greatly increases network deployment costs. Industry users expect to implement 5G cellular network coverage in a campus with low network construction costs, and non-3GPP access technology coverage is supported. Therefore, a more simplified solution of non-3GPP-based access to the 5GC is needed.

In addition to a terminal device (UE, supporting a subscriber identity module (SIM) card, and supporting a NAS module) that supports 5GC access, there is another terminal device (which does not support the NAS module, but may support the SIM card), and the another terminal device usually supports a non-3GPP access technology such as a WLAN or a wired network. For the another terminal device that is similar to the UE terminal device, a non-3GPP access gateway needs to be deployed, and the non-3GPP access gateway acts as a proxy for the another terminal device to support the NAS module. Consequently, deployment costs of the non-3GPP access gateway are higher.

This application provides an extremely simplified non-3GPP access solution for a scenario in which terminal devices (user equipment (UE) and another terminal device) access a core network by using a non-3GPP access technology, that is, a solution in which the terminal devices can access the core network without a non-3GPP access gateway.

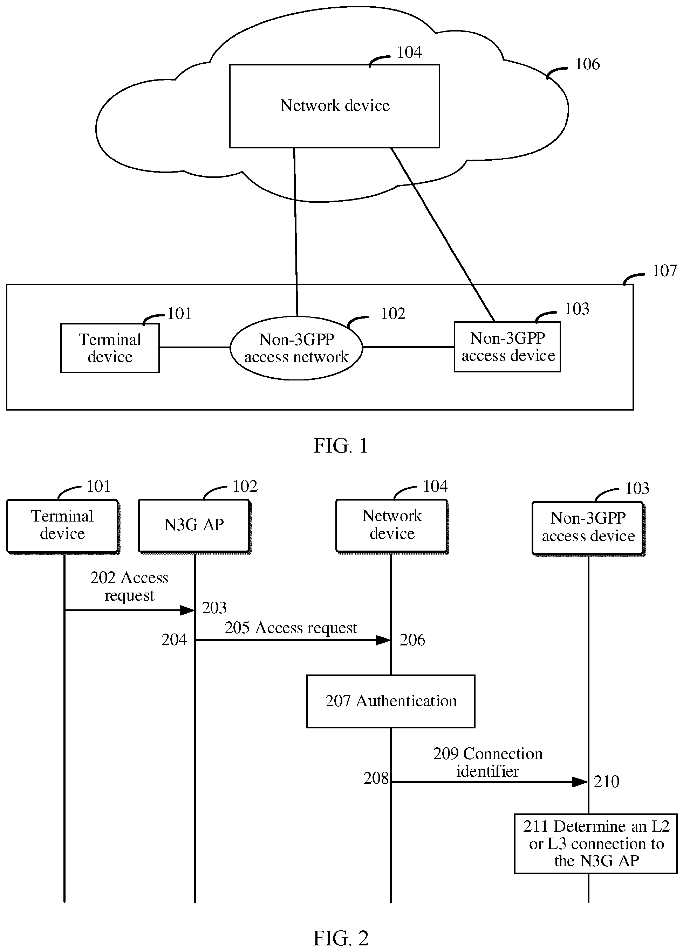

FIG. 1 is a block diagram of a communication network 100 in which a possible implementation of this application can be implemented. As shown in the figure, the communication network 100 includes a terminal device 101, a non-3GPP access point (N3G AP) 102, a non-3GPP access device 103, and a network device 104. The network device 104 is in a core network 110, is a newly added function of the core network 110, and is responsible for supporting functions such as authentication, registration management, and session management of a terminal device on a non-3GPP access side. For a terminal device that succeeds in authentication, a user context is generated, where the user context includes a service type supported by the terminal device. In addition, a control plane-user plane (CP-UP) session connection establishment procedure to the non-3GPP access device 103 determined based on the service type is initiated. The network device 104 notifies the non-3GPP access device 103 to establish an L2 or L3 connection to the non-3GPP access point 102, and establishes a correspondence between an access side connection and a CP-UP session or an N9 session. In some embodiments, the network device 106 may further be split into a first network device, a second network device, and a third network device. The first network device has an authentication function, the second network device has a registration management function, and the third network device has a session management function.

It may be understood that a quantity of access network devices and a quantity of terminal devices shown in FIG. 1 are merely examples, and are not intended to impose any limitation. Based on an actual requirement, the communication network 100 may include any appropriate quantities of various types of network elements.

FIG. 2 is a signaling interaction diagram of an example communication process 200 according to a possible implementation of this application. For discussion purposes, the communication process 200 is described with reference to various elements shown in FIG. 1. However, it should be understood that the communication process 200 may alternatively be performed between a network device and a terminal device in any other communication scenario.

As shown in FIG. 2, the terminal device 101 sends (201) an access request 202 to the N3G AP 102. The access request 202 is used to connect the terminal device 101 to the core network. In some embodiments, the terminal device establishes a connection to the N3G AP 102 based on a conventional technology. The N3G AP may be a WLAN access point (WLAN AP), or a node in which a WLAN AP and WLAN access control (WLAN AC) are integrated. This is not limited in this application. In some embodiments, the access request 202 may be an authentication request, an access registration request, an authentication, authorization, and accounting (AAA) message, or the like. This is not limited in this application.

The N3G AP 102 receives the access request 202 (203), and then sends an access request 205 to the network device 104 (204). The network device 104 receives the access request 205 (206), and performs authentication based on the access request 205 (207). After the authentication succeeds, the network device 104 sends a connection identifier 209 to the non-3GPP access device 103 (208). The non-3GPP access device 103 receives the connection identifier 209 (210), and determines an L2 or L3 connection between the non-3GPP access device 103 and the non-3GPP access point 102 based on the connection identifier 209 (211).

According to the foregoing embodiment, the network device is added to the core network, and the network device is responsible for authentication, registration management, and session management of the terminal device, so that the terminal device can access the core network without a non-3GPP access gateway.

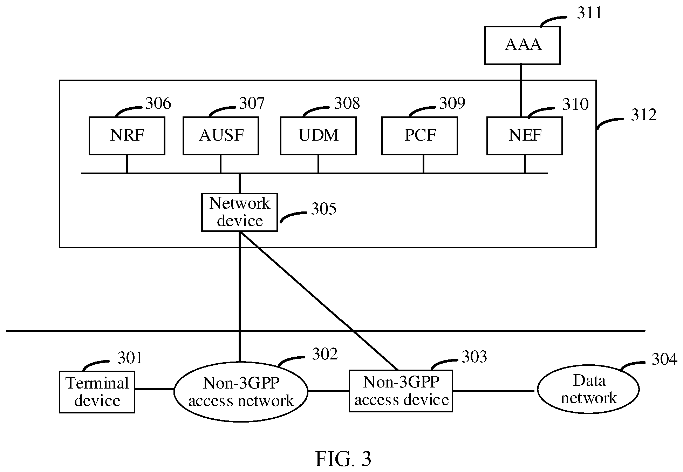

FIG. 3 is a diagram of a system architecture according to a possible implementation of this application. As shown in FIG. 3, the system architecture includes a terminal device 301, a non-3GPP access network (N3G AP) 302, a non-3GPP access device 303, a data network 304, a network device 305, a network exposure function (NEF) 306, a policy control function (PCF) 307, a user data management (UDM) function 308, an authentication server function (AUSF) 309, a network repository function (NRF) 310, and an authentication, authorization, and accounting (AAA) function 311. The network device 305, the network exposure function (NEF) 306, the policy control function (PCF) 307, the user data management (UDM) function 308, the authentication server function (AUSF) 309, and the network repository function (NRF) 310 are in a core network 312. The network device 305 is a newly added function of the core network 312, and has same functions as the network device 104 in FIG. 1.

The non-3GPP access network 302 includes a non-3GPP access point device, and/or at least one of a non-3GPP access control device, an L2 switch, and an L3 router. For example, when a non-3GPP access technology is a WLAN access technology, the non-3GPP access network 302 includes a WLAN access point (WLAN AP) and WLAN access control (WLAN AC), and optionally, includes the L2 switch or the L3 router.

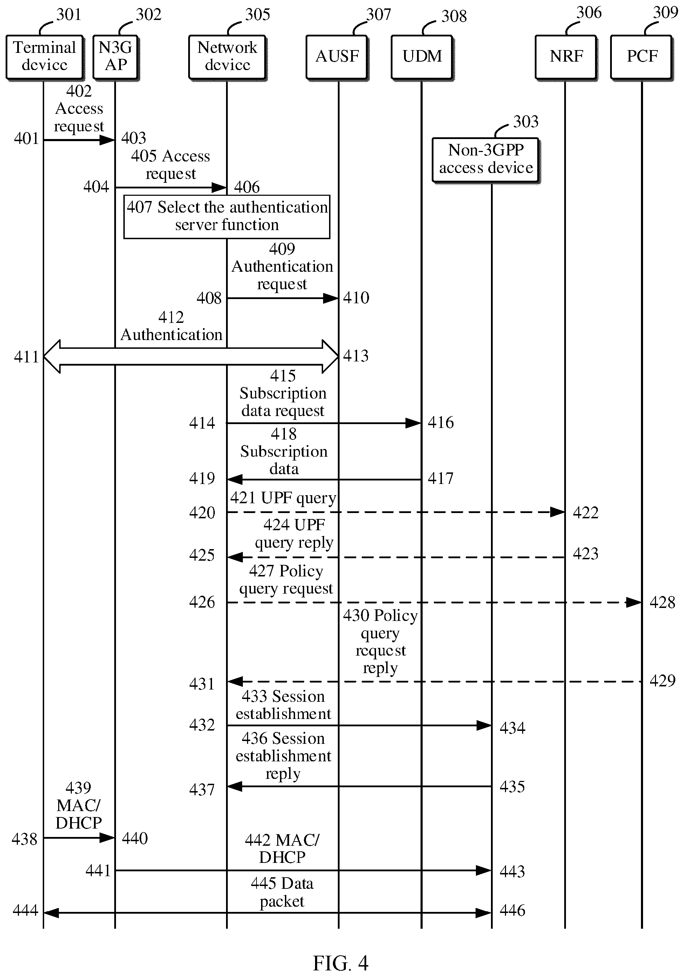

FIG. 4 is a signaling interaction diagram of a more detailed example communication process 400 according to a possible implementation of this application. For discussion purposes, the communication process 400 is described with reference to various elements shown in FIG. 3. However, it should be understood that the communication process 400 may alternatively be performed between a network device and a terminal device in any other communication scenario.

As shown in FIG. 4, the terminal device 301 sends an access request 402 to the N3G AP 302 (401). The access request 402 is used to connect the terminal device 301 to the core network. In some embodiments, the terminal device 301 establishes a connection to the N3G AP 302 based on a conventional technology. The N3G AP 302 may be a WLAN AP, or a node in which a WLAN AP and WLAN AC are integrated. This is not limited in this application. In some embodiments, the access request 402 may be an authentication request, an access registration request, an AAA message, or the like. This is not limited in this application.

After receiving the access request 402 (403), the N3G AP 302 sends an access request 405 to the network device 305 (404). In some embodiments, the access request includes: an identifier of the terminal device, a medium access control MAC address of the terminal device, an identifier of the non-3GPP access point, or an extensible authentication protocol EAP message. In some embodiments, identification information of the non-3GPP access point may be a service set identifier (SSID), a basic service set identifier (BSSID), or a homogenous extended service set identifier (HESSID) of the WLAN AP. The EAP message may be an EAP-AKA message or an EAP-AKA' message.

After receiving the access request 405 (406), the network device 305 selects an authentication server function (407). In some embodiments, the network device 305 selects, based on the identifier or the MAC address of the terminal device 301, the authentication server function AUSF 307 associated with the terminal device 301. In addition, the network device 305 sends, to the AUSF 307, an authentication request 409 including the EAP message (408). Specifically, the network device 305 parses the request 405, and the network device 405 stores at least one of the identifier and the MAC address of the terminal device, and location information of the terminal device. The location information of the terminal device is the identification information of the N3G AP. The network device 305 initiates an authentication service request to the authentication server function based on the request message or the EAP message included in the request message. Specifically, the network device 305 sends the request message to an authentication server function 307, where the request message includes the received EAP message and at least one of the identifier or the MAC address of the terminal device. The network device 305 may select the authentication server function based on the identifier or the MAC address of the terminal.

In some embodiments, based on the conventional technology, an authentication process 412 is performed between the authentication server function 307 and the terminal device 301. Specifically, the authentication server function 307 sends a request message to the user data management function, to obtain an authentication vector parameter related to the terminal device. The authentication server function 307 interacts with the terminal device based on the authentication vector parameter, to verify validity of the terminal device 305. This procedure is applicable to a case in which a 5GC network is responsible for authentication on the terminal when the terminal device 305 supports a SIM card, for example, when the terminal device is user equipment (UE). Optionally, if a subscription data management function 307 determines that authentication on the terminal device is to be performed by an AAA server (for example, when the terminal device is another terminal device, authentication is to be performed by an AAA server deployed by an enterprise), the subscription data management function indicates, to the authentication server function 307, that authentication on the terminal device 101 is to be performed by the AAA server. The authentication server function sends a request message to a network exposure function, and the network exposure function continues to forward the authentication message to the AAA server, to establish interaction between the terminal device and the AAA server, and complete an authentication procedure of the terminal device.

In some embodiments, for a terminal device that succeeds in authentication, the authentication server function 307 or the AAA server notifies the network device 305 that the authentication on the terminal device succeeds, for example, sends a message to the network device 305, where the message includes at least one of an EAP-Success message and a key parameter. The network device 305 determines, based on the received EAP-Success message or key parameter, that the authentication on the terminal device succeeds, and forwards at least one of the EAP-Success message and the key parameter to the N3G AP 302. The N3G AP 302 determines, based on the at least one of the EAP-Success message and the key parameter, that the authentication on the terminal device succeeds. If the key parameter is received, a wireless air interface between the terminal device 301 and the N3G AP 302 is encrypted based on the key parameter.

In some embodiments, for the terminal device 301 that succeeds in the authentication, the network device 305 obtains subscription data of the terminal device 301. In some embodiments, the network device 1305 selects, based on the identifier or the MAC address of the terminal device 301, the data management function 308 associated with the terminal device 301. Then, the network device 305 sends a subscription data request 415 to the data management function 308 (414). Then, the network device 305 receives the subscription data 418 of the terminal device 301 from the data management function 308 (419). Specifically, the network device 305 selects the user data management function 308 based on the identifier or the MAC address of the terminal device, and sends the request message to the user data management function 308, where the request message includes at least one of the identifier or the MAC address of the terminal device, and optionally, the location information of the terminal device 301. The user data management function 308 determines the subscription data of the terminal device 301 based on the identifier or the MAC address of the terminal device.

In some embodiments, the subscription data 418 includes: the identifier of the terminal device, the MAC address of the terminal device 301, a service identifier of the terminal device 301, slice information associated with the terminal device 301, mobility information of the terminal device 301, power saving information of the terminal device 301, an identifier that is of the non-3GPP access device and that corresponds to a service of the terminal device 301, and policy information corresponding to the service of the terminal device 301. The service identifier identifies a service type supported by the terminal device 301. For example, the service identifier is DNN information, a video service indication, an IP multimedia subsystem (IMS) service indication, an internet service indication, a campus-specific service indication (defined by a campus manager), an identifier of a service server (for example, at least one of a fully qualified domain name (FQDN) of the service server or an IP address of the service server), or the like. The foregoing terminal device information indicates whether the terminal device 301 has mobility, whether the terminal device is a power saving device, and the like. The power saving device is a device that needs to save energy and power. The device has low power consumption and long standby time.

When the non-3GPP access device is a UPF, the identifier that is of the non-3GPP access device and that corresponds to the service is a UPF identifier. The UPF identifier may be at least one of a UPF FQDN or UPF IP address information. The policy control information corresponding to the service may include, for example, at least one of a QoS parameter, a charging policy, a routing policy, or a mobility management policy corresponding to the service. The QoS parameter includes a QoS parameter used by the UPF, and optionally, includes a QoS parameter of the air interface between the terminal device and the N3G AP. The charging policy includes information such as charging by time or charging by traffic. The routing policy includes whether transmission of the service is preferentially performed via the N3G AP or is preferentially performed by using a 3GPP access technology. The mobility management policy includes whether the service supports mobility, to be specific, whether the service continues to be maintained or a service connection is broken after the terminal device moves.

In some instances, if the network device 305 determines that the subscription data does not include the UPF identifier, the network device 305 sends (420) a query request 421 to the network repository function 306 (420), where the query request 418 includes the service identifier of the terminal device 301. Then, the network device 305 receives a reply 424 from the network repository function 306 (425), where the reply 424 includes the UPF identifier corresponding to the service identifier. Specifically, when obtaining no UPF ID corresponding to the service, the network device 305 initiates a UPF query request. To be specific, the network device 305 sends a request message to the network repository function 306, where the request message includes at least one service identifier, and optionally, includes the location information of the terminal device, or the identifier or the MAC address of the terminal device. The network repository function 306 selects the UPF based on the service identifier, and optionally, based on the location information of the terminal device and/or the identifier of the terminal device. The network repository function 306 sends a reply message to the network device 305, where the reply message includes a correspondence between the service identifier and the UPF identifier.

In some instances, if the network device 305 determines that the subscription data 418 does not include the policy information or includes only partial policy information, the network device 305 sends a query request 427 to the policy control function 309 (426), where the query request 427 includes the service identifier of the terminal device 301. Then, the network device 305 receives a reply 430 from the policy control function 309 (431), where the reply 430 includes the policy information corresponding to the service identifier. Specifically, when obtaining no service policy information or obtains only partial policy information, the network device 305 initiates a service policy query request. To be specific, the network device 305 sends a request message to the policy control function 309, where the request includes at least one service identifier, an identifier or a MAC address of the user equipment, and optionally, includes the location information of the terminal device. The policy function 309 determines, based on the service identifier and the identifier or the MAC address of the user equipment, the policy information corresponding to the service. Then, the policy function 309 sends a correspondence between the service identifier and the policy information to the network device 305.

In some embodiments, the network device 305 sends a session connection establishment request 433 to the non-3GPP access device 303 (432). Then, the network device 405 receives a session establishment success indication 4366 from the non-3GPP access device 303 (437). Specifically, when the non-3GPP access device 303 is a UPF, the network device 305 determines the non-3GPP access device 303 based on a UPF ID, and sends a CP-UP session connection establishment request message to the non-3GPP access device 303. The request message is used to establish a session connection between the network device 305 and the non-3GPP access device 303, which is referred to as a CP-UP session or a CP-UP connection for short. The CP-UP session is in one-to-one correspondence with the terminal device, in other words, a unique CP-UP session is established for each terminal device. Alternatively, the CP-UP session is in one-to-one correspondence with the service identifier, in other words, a unique CP-UP session is established for each type of service identifier (for example, a DNN).

In some embodiments, the session connection establishment request 433 includes: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; and second indication information, indicating the non-3GPP access device to establish a correspondence between a CP-UP session and an L2 or L3 connection that is between the non-3GPP access device and an access network device. Specifically, the request message includes: the description information of the service flow, the policy information (including at least one of a QoS policy, a charging policy, and a routing policy) corresponding to the service flow, and optionally, the first indication information and/or the second indication information. The description information of the service flow is at least one of an IP 5-tuple (the IP 5-tuple includes a source IP address, a destination IP address, a source port number, a destination port number, and a protocol number), or at least one of a terminal and a destination MAC address. The first indication information indicates that there is no need to allocate the GTP-U tunnel identifier to the non-3GPP access device, or indicate that there is no need to allocate the GTP-U tunnel identifier of the N3 interface. The second indication information indicates the correspondence between the L2 or L3 connection that is established by the non-3GPP access device and that is between the non-3GPP access device and the access network device (for example, an N3G AP, N3G AC, a switch, or a router) and the CP-UP session. The L2 connection is identified based on the MAC address of the terminal device, and the L3 connection is identified based on an IP address of the terminal device. To be specific, when a data packet received by the non-3GPP access device carries the MAC address of the terminal, it indicates that the data packet is a data packet whose transmission is performed over the L2 connection. When a data packet received by the non-3GPP access device carries the IP address of the terminal, it indicates that the data packet is a data packet whose transmission is performed over the L3 connection. The non-3GPP access device performs, by using the policy information received on the CP-UP session, policy control on the data packet whose transmission is performed over the L2 or L3 connection. In some embodiments, a connection identifier is carried in at least one of the following: the description information of the service flow, the policy information corresponding to the service flow, and the second indication information.

In some embodiments, when the first indication information or the second indication information does not exist, the non-3GPP access device determines, based on the request message, that there is no need to allocate the GTP-U tunnel identifier, or determines, based on the request message, to establish the correspondence between the CP-UP connection and the L2 or L3 connection, that is, the foregoing information is indicated by using a message name. The following provides examples of the description information of the flow and the policy information included in the request message. Example 1: The description information of the service flow includes the MAC address of the terminal (the MAC address of the terminal is obtained by the N3G-CP in step 1; or the MAC address of the terminal is included in the subscription data of the terminal, and is sent to an N3G-CP in step 4), and optionally, a protocol identifier is set to a dynamic host configuration protocol (DHCP). The policy information indicates the non-3GPP access device to forward, a DHCP data packet received over the L2 link, to an SMF by using a CP-UP session corresponding to the L2 link. Example 2: The description information of the service flow includes the MAC address of the terminal, and the policy information indicates that a QoS bandwidth is 10 Mbps. It indicates the non-3GPP access device to perform 10 Mbps bandwidth control on a data packet that is received over the L2 link and that includes the MAC address of the terminal. Example 3: The description information of the service flow includes the MAC address of the terminal, and the policy information indicates that charging is performed based on traffic. It indicates the non-3GPP access device to collect statistics on a quantity of data packets that is received over the L2 link and that includes the MAC address of the terminal, and reports statistical information to the N3G-CP by using the CP-UP session corresponding to the L2 link.

In some embodiments, the terminal device 301 obtains an IP address from the non-3GPP access device of the core network via the non-3GPP access point, the terminal device 301 encapsulates a service data packet based on the IP address, and the terminal device 301 sends a service data packet to the non-3GPP access device via the non-3GPP access point. Specifically, the terminal device 301 initiates a DHCP procedure to obtain the IP address of the terminal device. The terminal device 301 sends a DHCP discovery message or request message 439 to the N3G AP 302 (438). The N3G AP 302 continues to forward the message to the non-3GPP access device 303 (441). The non-3GPP access device 303 determines matched policy information based on the MAC address of the terminal device included in an L2 packet header of a data packet in which the DHCP message is located. If the policy in Example 1 in step 8 is matched, the non-3GPP access device 303 forwards the DHCP message data packet to the SMF by using a corresponding CP-UP session. The SMF is the IP address of the terminal device, and sends a DHCP reply message to the non-3GPP access device 303, where the DHCP reply message includes the IP address of the terminal allocated by the SMF. The non-3GPP access device 303 continues to forward the DHCP reply message to the terminal device 301 over the corresponding L2 connection. Optionally, the non-3GPP access device 303 identifies the DHCP message, allocates the IP address to the terminal device 301, and returns the IP address to the terminal device 301 by using the DHCP reply message. Optionally, the non-3GPP access device 303 reports, by using the corresponding CP-UP session, a correspondence between the MAC address of the terminal device and the IP address allocated by the non-3GPP access device 303 to the terminal device, to the SMF. Then, the terminal device 301 encapsulates the service data packet by using the obtained IP address of the terminal, and sends the data packet 442 to the non-3GPP access device 303 (444). After receiving the data packet 445 (446), the non-3GPP access device 303 matches description information of a service flow based on an L2 MAC address or an L3 IP address of the data packet, determines policy information corresponding to the service flow, and performs policy control on the data packet, for example, routing and/or forwarding control, QoS control, or charging information statistics.

According to the foregoing embodiment,terminal devices (UE and another terminal device) can be supported in accessing the core network by using a non-3GPP access technology. This avoids deployment of a non-3GPP access gateway.

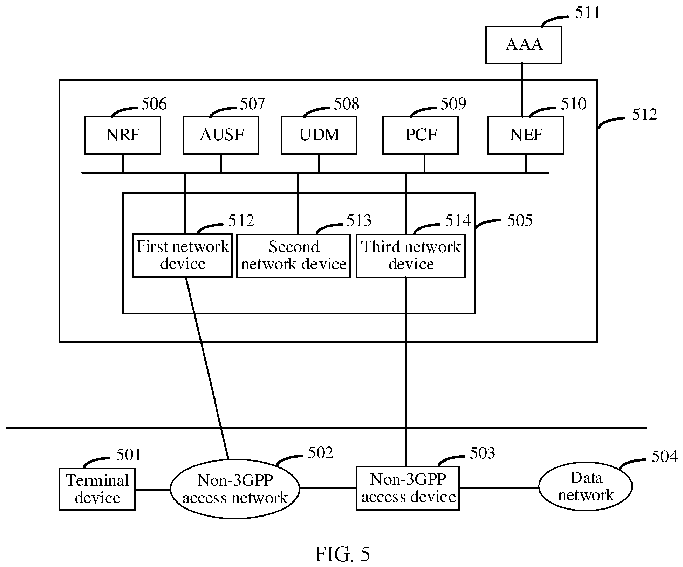

FIG. 5 is a diagram of a system architecture according to another possible implementation of this application. As shown in FIG. 5, a terminal device 501, a non-3GPP access network (N3G AP) 502, a non-3GPP access device 503, a data network 504, a network device 505, a network exposure function (NEF) 506, a policy control function (PCF) 507, a user data management (UDM) function 508, an authentication server function (AUSF) 509, a network repository function (NRF) 510, and an authentication, authorization, and accounting (AAA) function 511 are included. The network device 505, the network exposure function (NEF) 506, the policy control function (PCF) 507, the user data management (UDM) function 508, the authentication server function (AUSF) 509, and the network repository function (NRF) 510 are in a core network 512. The network device 505 is a newly added function of the core network 512, and has same functions as the network device 104 in FIG. 1.

Further, functions of the network device 505 are further split into a first network device 512, a second network device 513, and a third network device 514. The first network device 512 has an authentication function (NSWOF), the second network device 513 has a registration management function (AMF), and the third network device 514 has a session management function (SMF). The foregoing three functions may be deployed together or separately, to jointly implement the functions of the network device 505 in the architecture. In addition, the foregoing three functions may be functions in a 5GC, or may be functions in a future network (for example, a 6GC). Specific names of the NSWOF, the AMF, and the SMF in a future network architecture are not limited in this patent. For example, in the future network architecture, the AMF may be correspondingly a registration management function, the SMF may be correspondingly a session management function, and the NSWOF may be correspondingly an authentication server function.

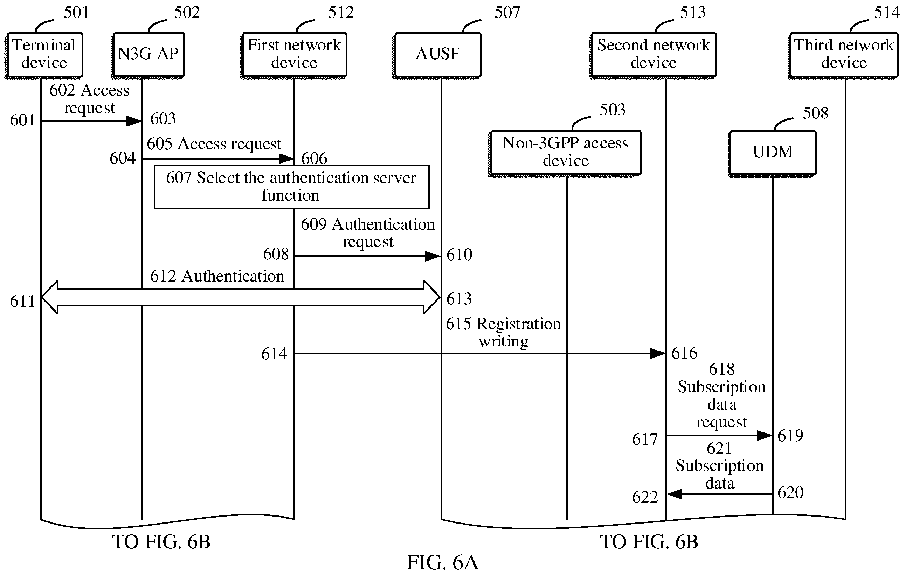

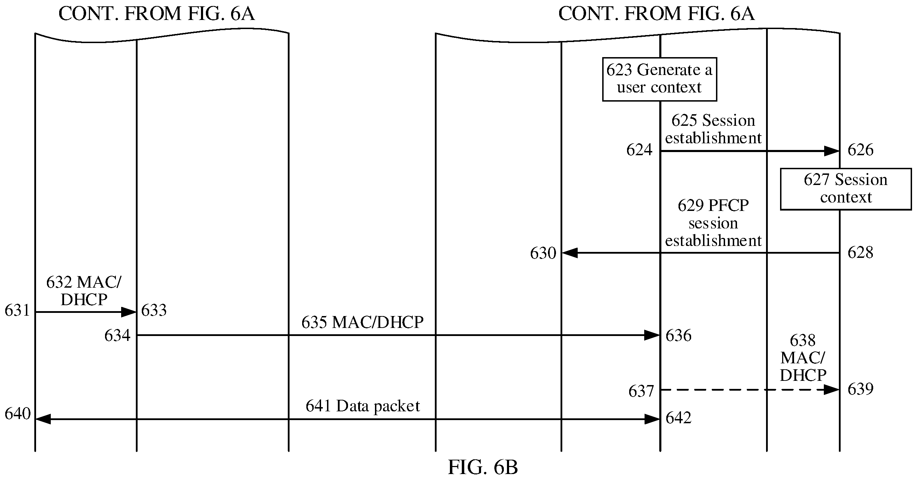

FIG. 6A and FIG. 6B are a signaling interaction diagram of an example communication process 600 according to a possible implementation of this application. For discussion purposes, the communication process 600 is described with reference to various elements shown in FIG. 5. However, it should be understood that the communication process 600 may alternatively be performed between a network device and a terminal device in any other communication scenario. Specifically, FIG. 6A and FIG. 6B show an interaction solution between network functions when the network device 505 in FIG. 5 is split into a plurality of network functions.

As shown in FIG. 6A, the terminal device 501 sends an access request 602 to the N3G AP 502 (601). The access request 602 is used to connect the terminal device 501 to the core network. In some embodiments, the terminal device establishes a connection to the N3G AP 602 based on a conventional technology. The N3G AP 602 may be a WLAN AP, or a node in which a WLAN AP and WLAN AC are integrated. This is not limited in this application. In some embodiments, the access request 602 may be an authentication request, an access registration request, an AAA message, or the like. This is not limited in this application.

After receiving the access request 602 (603), the N3G AP 502 sends an access request 605 to the first network device 512 (604). In some embodiments, the access request includes: an identifier of the terminal device 501, a medium access control MAC address of the terminal device 501, an identifier of the non-3GPP access point 502, or an extensible authentication protocol EAP message. In some embodiments, identification information of the non-3GPP access point 502 may be an SSID, a BSSID, or an HESSID of the WLAN AP. The EAP message may be an EAP-AKA message or an EAP-AKA' message.

After receiving the access request 605 (606), the first network device 512 selects an authentication server function (607). In some embodiments, the first network device 512 selects, based on the identifier or the MAC address of the terminal device 501, the AUSF 507 associated with the terminal device 501. In addition, the first network device 512 sends, to the AUSF 507, an authentication request 609 including the EAP message (608). Specifically, the first network device 512 parses the request 605, and the first network device 512 stores at least one of the identifier of the terminal device and the MAC address of the terminal device, and location information of the terminal device. The location information of the terminal device is the identification information of the N3G AP 502. The first network device 512 initiates the authentication service request to the authentication server function based on the request message or the EAP message included in the request message. Specifically, the first network device 512 sends the request message to the authentication server function 507, where the request message includes the received EAP message and at least one of the identifier or the MAC address of the terminal device. The first network device 512 may select the authentication server function based on the identifier of the terminal device or the MAC address of the terminal.

In some embodiments, based on the conventional technology, an authentication process 612 is performed between the authentication server function 507 and the terminal device 501. Specifically, the authentication server function 507 sends a request message to the user data management function, to obtain an authentication vector parameter related to the terminal device. The authentication server function 507 interacts with the terminal device based on the authentication vector parameter, to verify validity of the terminal device 501. This procedure is applicable to authentication of the terminal for which a 5GC network is responsible when the terminal device 501 supports a SIM card, for example, when the terminal device is user equipment (UE). Optionally, if a subscription data management function determining that authentication on the terminal device is to be performed by an AAA server (for example, when the terminal device is another terminal device, authentication is to be performed by an AAA server deployed by an enterprise), a subscription data management function indicates, to the authentication server function, that the authentication on the terminal device 101 is to be performed by the AAA server. The authentication server function 507 sends a request message to a network exposure function, and the network exposure function continues to forward the authentication message to the AAA server, to establish interaction between the terminal device and the AAA server, and complete an authentication procedure of the terminal device.

In some embodiments, for a terminal device 501 whose authentication succeeds, the authentication server function 507 or the AAA server notifies the first network device 512 that the authentication on the terminal device 501 succeeds, for example, sends a message to the first network device 512, where the message includes at least one of an EAP-Success message and a key parameter. The first network device 512 determines, based on the received EAP-Success message or key parameter, that the authentication on the terminal device 501 succeeds, and forwards at least one of the EAP-Success message and the key parameter to the N3G AP 502. The N3G AP 502 determines, based on the at least one of the EAP-Success message and the key parameter, that the authentication on the terminal device 501 succeeds. If the key parameter is received, a wireless air interface between the terminal device 501 and the N3G AP 502 is encrypted based on the key parameter.

In some embodiments, the first network device 512 sends a registration request 615 used for the terminal device 501 to the second network device 513 (614). Specifically, for the terminal device 501 whose authentication succeeds, the first network device 512 initiates the request message 615 to the second network device 513, where the request message includes at least one of the identifier of the terminal or the MAC address of the terminal, includes the location information of the terminal device, and optionally, includes an authentication success indication. The authentication success indication indicates that the authentication of the terminal device on a current access technology side (that is, a non-3GPP access technology) succeeds. Further, it may indicate that the authentication for initial access succeeds, or it may indicate that re-authentication succeeds. For example, after the terminal device switches to the N3G AP, the re-authentication succeeds.

In some embodiments, the second network device 513 obtains, in response to the registration request 615 that is received from the first network device 512 (616) and that is used to register the terminal device connected to the non-3GPP-technology-based access point 502 with the core network, the identifier or the MAC address of the terminal device 501 and the identifier of the non-3GPP access point from the registration request. In addition, if determining, based on the registration request, that the authentication on the terminal device 501 succeeds, the second network device 513 obtains subscription data of the terminal device 501 from the user data management function 508. Then, the second network device 513 generates a user context of the terminal device 501 based on the identifier or the MAC address of the terminal device 501, the identifier of the non-3GPP access point, and the subscription data of the terminal device 501.

Specifically, the second network device 513 determines, based on the authentication success indication or based on the request message 615 sent by the first network device 512, that the authentication on the terminal device 501 succeeds. For the terminal device 501 whose authentication succeeds, the second network device 513 stores at least one of the identifier or the MAC address of the terminal device, and the location information of the terminal device 501. In addition, the second network device 513 obtains the subscription data of the terminal device from the user data management function 508. Specifically, the second network device 513 sends a subscription data request 618 to the data management function 508 (617). Then, the second network device 513 receives the subscription data 621 of the terminal device 501 from the data management function 508 (622).

In some embodiments, the subscription data 621 includes: the identifier of the terminal device, the MAC address of the terminal device 501, a service identifier of the terminal device 501, slice information associated with the terminal device 501, mobility information of the terminal device 501, power saving information of the terminal device 501, an identifier of the non-3GPP access device corresponding to a service of the terminal device 501, and policy information corresponding to the service of the terminal device 501. The service identifier identifies a service type supported by the terminal device. For example, the service identifier is DNN information, a video service indication, an IMS service indication, an internet service indication, a campus-specific service indication (defined by a campus manager), an identifier of a service server (for example, at least one of an FQDN of the service server or an IP address of the service server), or the like. The foregoing terminal device information indicates whether the terminal device has mobility, whether the terminal device is a power-saving device, and the like. The power-saving device is a device that needs to save energy and power. The device has low power consumption and long standby time.

When the non-3GPP access device is a UPF, the identifier of the non-3GPP access device corresponding to the service is a UPF identifier. The UPF identifier may be at least one of a UPF FQDN or UPF IP address information. The policy control information corresponding to the service may include, for example, at least one of a QoS parameter, a charging policy, a routing policy, or a mobility management policy corresponding to the service. The QoS parameter includes a QoS parameter used by the UPF, and optionally, includes a QoS parameter of the air interface between the terminal device and the N3G AP. The charging policy includes information such as charging by time or charging by traffic. The routing policy includes whether transmission of the service is preferentially performed via the N3G AP or is preferentially performed by using a 3GPP access technology. The mobility management policy includes whether the service supports mobility, to be specific, whether the service continues to be maintained or a service connection is disconnected after the terminal device moves.

In some embodiments, the second network device 513 stores at least one of the identifier or the MAC address of the terminal device, the location information of the terminal device, and the subscription data of the terminal device. The foregoing information forms a user equipment context (623).

In some embodiments, the second network device 513 establishes a session with the third network device 514. Specifically, the second network device 513 initiates a session establishment procedure to the third network device 514 based on the service identifier supported by the terminal device. Specifically, the second network device 513 selects the third network device 514 based on the service identifier and optionally, based on the location information of the terminal device. The second network device 513 sends a request message 625 to the third network device 514 (624), where the request message includes at least one of the identifier or the MAC address of the terminal device, includes the service identifier, and optionally, includes the slice information. Based on the conventional technology, policy information corresponding to a service is obtained from a policy control function (for example, a PCF).

In some embodiments, the third network device 514 sends a session connection establishment request 629 to the non-3GPP access device 503 (628). Specifically, when the non-3GPP access device 503 is a UPF, the third network device 514 determines the non-3GPP access device 503 based on a UPF ID, and sends a CP-UP session connection establishment request message to the non-3GPP access device 503. The request message is used to establish a session connection between the third network device 514 and the non-3GPP access device 503, which is referred to as a CP-UP session or a CP-UP connection for short. The CP-UP session is in one-to-one correspondence with the terminal device, in other words, a unique CP-UP session is established for each terminal device. Alternatively, the CP-UP session is in one-to-one correspondence with the service identifier, in other words, a unique CP-UP session is established for each type of service identifier (for example, a DNN).

In some embodiments, the session connection establishment request 629 includes: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; and second indication information, indicating the non-3GPP access device to establish a correspondence between a CP-UP session and an L2 or L3 connection that is between the non-3GPP access device and an access network device. Specifically, the request message includes: the description information of the service flow, the policy information (including at least one of a QoS policy, a charging policy, and a routing policy) corresponding to the service flow, and optionally, the first indication information and/or the second indication information. The description information of the service flow is at least one of an IP 5-tuple (the IP 5-tuple includes a source IP address, a destination IP address, a source port number, a destination port number, and a protocol number), or at least one of a terminal and a destination MAC address. The first indication information indicates that there is no need to allocate the GTP-U tunnel identifier to the non-3GPP access device, or indicate that there is no need to allocate the GTP-U tunnel identifier of the N3 interface. The second indication information indicates the correspondence between the L2 or L3 connection that is established by the non-3GPP access device and that is between the non-3GPP access device and the access network device (for example, an N3G AP, N3G AC, a switch, or a router) and the CP-UP session. The L2 connection is identified based on the MAC address of the terminal device, and the L3 connection is identified based on an IP address of the terminal device. To be specific, when a data packet received by the non-3GPP access device carries the MAC address of the terminal, it indicates that the data packet is a data packet whose transmission is performed over the L2 connection. When a data packet received by the non-3GPP access device carries the IP address of the terminal, it indicates that the data packet is a data packet whose transmission is performed over the L3 connection. The non-3GPP access device performs, by using the policy information received on the CP-UP session, policy control on the data packet whose transmission is performed over the L2 or L3 connection. In some embodiments, a connection identifier is carried in at least one of the following: the description information of the service flow, the policy information corresponding to the service flow, and the second indication information.

In some embodiments, when the first indication information or the second indication information does not exist, the non-3GPP access device determines, based on the request message, that there is no need to allocate the GTP-U tunnel identifier, or determines, based on the request message, to establish the correspondence between the CP-UP connection and the L2 or L3 connection, that is, the foregoing information is indicated by using a message name. The following provides examples of the description information of the flow and the policy information included in the request message. Example 1: The description information of the service flow includes the MAC address of the terminal (the MAC address of the terminal is obtained by the N3G-CP in step 1, or the MAC address of the terminal is included in the subscription data of the terminal, and is sent to the second network device 513), and optionally, a protocol identifier is set to a DHCP protocol. The policy information indicates the non-3GPP access device to forward, a DHCP data packet received over the L2 link, to an SMF by using a CP-UP session corresponding to the L2 link. Example 2: The description information of the service flow includes the MAC address of the terminal, and the policy information indicates that a QoS bandwidth is 10 Mbps. It indicates the non-3GPP access device to perform 10 Mbps bandwidth control on a data packet that is received over the L2 link and that includes the MAC address of the terminal. Example 3: The description information of the service flow includes the MAC address of the terminal, and the policy information indicates that charging is performed based on traffic. It indicates the non-3GPP access device to collect statistics on a quantity of data packets that is received over the L2 link and that includes the MAC address of the terminal, and reports statistical information to the N3G-CP by using the CP-UP session corresponding to the L2 link.

In some embodiments, the terminal device 501 obtains an IP address from the non-3GPP access device 503 of the core network via the non-3GPP access point 502, the terminal device 501 encapsulates a service data packet based on the IP address, and the terminal device 501 sends a service data packet to the non-3GPP access device 503 via the non-3GPP access point 502. Specifically, the terminal device 501 initiates a DHCP procedure to obtain the IP address of the terminal device. The terminal device 501 sends a DHCP discovery message or request message 632 to the N3G AP 502 (631). The N3G AP 502 continues to forward the message to the non-3GPP access device 503 (633). The non-3GPP access device 503 determines matched policy information based on the MAC address of the terminal device included in an L2 packet header of a data packet in which the DHCP message is located. If the policy in Example 1 is matched, the non-3GPP access device 503 forwards the DHCP message data packet 638 to the third network device 514 by using a corresponding CP-UP session (637). The third network device 514 allocates an IP address to the terminal device 501, and sends a DHCP reply message to the non-3GPP access device 503, where the DHCP reply message includes the IP address of the terminal allocated by the third network device 514. The non-3GPP access device 503 continues to forward the DHCP reply message to the terminal device 501 over the corresponding L2 connection. Optionally, the non-3GPP access device 503 identifies the DHCP message, allocates the IP address to the terminal device 501, and returns the IP address to the terminal device 501 by using the DHCP reply message. In addition, optionally, the non-3GPP access device 503 reports, by using the corresponding CP-UP session, a correspondence between the MAC address of the terminal device and the IP address allocated by the non-3GPP access device 503 to the terminal device, to the third network device 514. Then, terminal device 501 encapsulates the service data packet by using the obtained IP address of the terminal, and sends the data packet 641 to the non-3GPP access device 503 (640). After receiving the data packet 638 (639), the non-3GPP access device 503 matches description information of a service flow based on an L2 MAC address or an L3 IP address of the data packet, determines policy information corresponding to the service flow, and performs policy control on the data packet, for example, routing and forwarding control, QoS control, or charging information statistics.

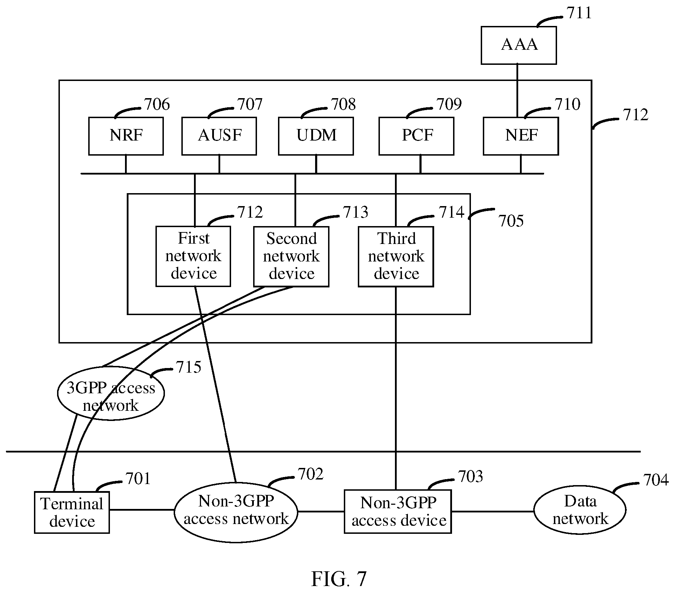

FIG. 7 is a diagram of a system architecture according to another possible implementation of this application. As shown in FIG. 7, a terminal device 701, a non-3GPP access network (N3G AP) 702, a non-3GPP access device 703, a data network 704, a network device 705, a network exposure function (NEF) 706, a policy control function (PCF) 707, a user data management (UDM) function 708, an authentication server function (AUSF) 709, a network repository function (NRF) 710, and an authentication, authorization, and accounting (AAA) function 711 are included. The network device 705, the network exposure function (NEF) 706, the policy control function (PCF) 707, the user data management (UDM) function 708, the authentication server function (AUSF) 709, and the network repository function (NRF) 710 are in a core network 712. The network device 705 is a newly added function of the core network 712, and has same functions as the network device 104 in FIG. 1. Further, in addition to supporting the non-3GPP access technology, the terminal device 701 further supports a 3GPP cellular access technology. Therefore, in comparison with the architecture in FIG. 5, a 3GPP side connection is added to the architecture in FIG. 7.

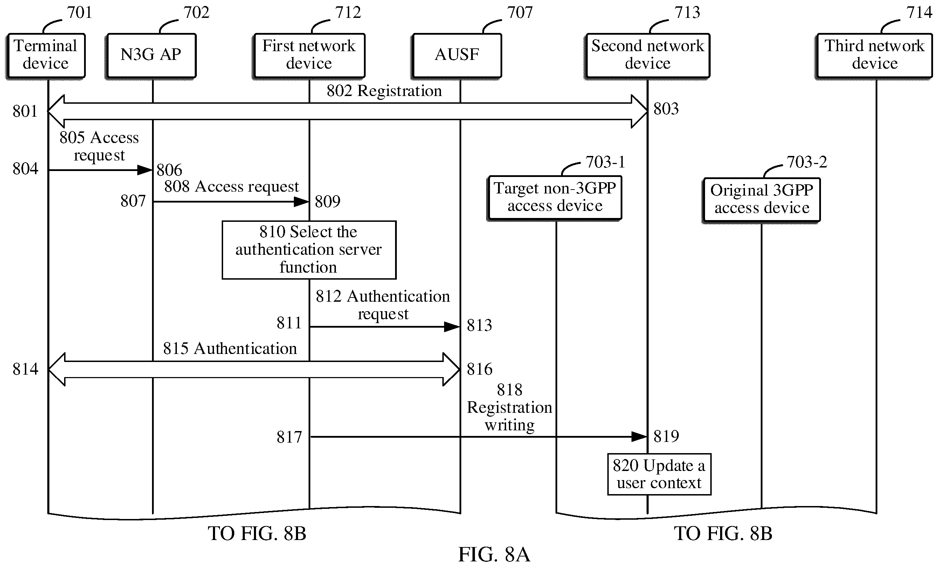

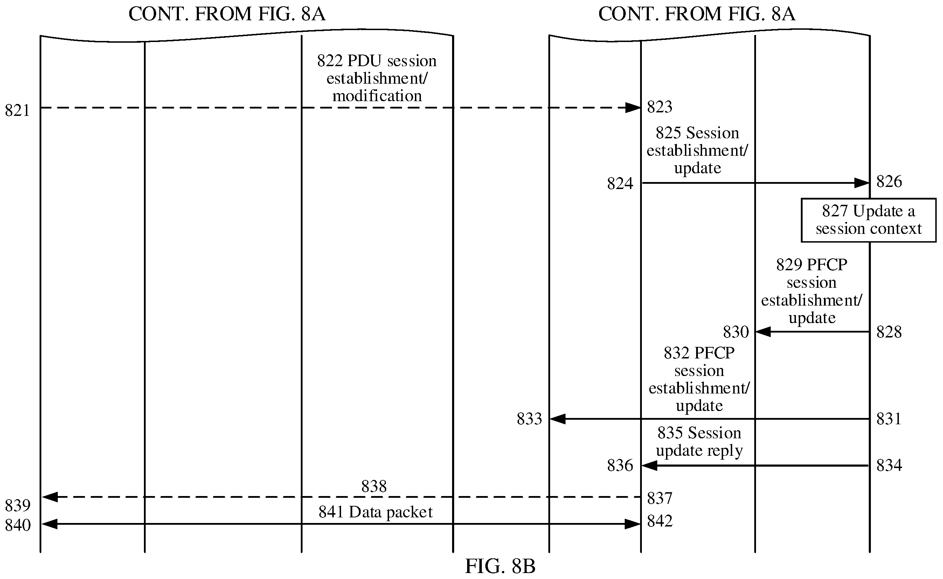

FIG. 8 A and FIG. 8B are a signaling interaction diagram of an example communication process 800 according to a possible implementation of this application. For discussion purposes, the communication process 800 is described with reference to various elements shown in FIG. 7. However, it should be understood that the communication process 800 may alternatively be performed between a network device and a terminal device in any other communication scenario. Specifically, FIG. 8A and FIG. 8B show signaling interaction when the terminal device 701 in FIG. 7 supports a NAS module.

As shown in FIG. 8A and FIG. 8B, an existing 5G technology is used as an example. The terminal device 701 registers with a 5GC by using a 3GPP radio access technology, in other words, registers with a registration function (for example, a second network device 713 with an AMF function), and the second network device 713 generates a user context. The second network device 713 allocates a temporary identifier 5G-GUTI to a registered terminal device 701. The 5G-GUTI includes an AMF identifier. In addition, based on the conventional technology, the terminal device 701 establishes, by using the 3GPP radio access technology, a PDU session corresponding to a service.

The terminal device 701 sends an access request 805 to the N3G AP 702 (804). The access request 805 is used to connect the terminal device 701 to the core network. In some embodiments, the terminal device establishes a connection to the N3G AP 702 based on the conventional technology. The N3G AP 702 may be a WLAN AP, or a node in which a WLAN AP and WLAN AC are integrated. This is not limited in this application. In some embodiments, the access request 805 may be an authentication request, an access registration request, an AAA message, or the like. This is not limited in this application. In some embodiments, the access request 805 includes the temporary identifier 5G-GUTI allocated to the terminal device 701 during registration.

After receiving the access request 805 (806), the N3G AP 702 sends an access request 808 to a first network device 712 (807). In some embodiments, the access request includes: an identifier of the terminal device, a medium access control MAC address of the terminal device, an identifier of the non-3GPP access point, or an extensible authentication protocol EAP message. In some embodiments, identification information of the non-3GPP access point may be an SSID, a BSSID, or an HESSID of the WLAN AP. The EAP message may be an EAP-AKA message or an EAP-AKA' message.

After receiving the access request 808 (809), the first network device 712 selects an authentication server function (810). In some embodiments, the first network device 712 selects, based on the identifier or the MAC address of the terminal device 701, the AUSF 707 associated with the terminal device 701. In addition, the first network device 701 sends, to the AUSF 707, an authentication request 812 including the EAP message (811). Specifically, the first network device 712 parses the request 808, and the first network device 712 stores at least one of the identifier of the terminal device and the MAC address of the terminal device, and location information of the terminal device. The location information of the terminal device is the identification information of the N3G AP. The first network device 712 initiates the authentication service request to the authentication server function 707 based on the request message or the EAP message included in the request message 808. Specifically, the first network device 712 sends the request message to the authentication server function 707, where the request message includes the received EAP message and at least one of the identifier or the MAC address of the terminal device. The first network device 712 may select the authentication server function based on the identifier of the terminal device or the MAC address of the terminal.

In some embodiments, based on the conventional technology, an authentication process 815 is performed between the authentication server function 707 and the terminal device 701. Specifically, the authentication server function 707 sends a request message to the user data management function, to obtain an authentication vector parameter related to the terminal device. The authentication server function 707 interacts with the terminal device based on the authentication vector parameter, to verify validity of the terminal device 701. When the terminal device is user equipment UE, the 5GC network is responsible for authentication of the terminal.

In some embodiments, for a terminal device whose authentication succeeds, the authentication server function 707 notifies the first network device 712 that the authentication on the terminal device succeeds, for example, sends a message to the first network device 712, where the message includes at least one of an EAP-Success message and a key parameter. The first network device 712 determines, based on the received EAP-Success message or key parameter, that the authentication on the terminal device succeeds, and forwards at least one of the EAP-Success message and the key parameter to the N3G AP 702. The N3G AP 702 determines, based on the at least one of the EAP-Success message and the key parameter, that the authentication on the terminal device succeeds. If the key parameter is received, a wireless air interface between the terminal device 701 and the N3G AP 702 is encrypted based on the key parameter.

In some embodiments, the first network device 712 sends a registration request 818 used for the terminal device 701 to the second network device 713 (817). Specifically, for the terminal device 701 whose authentication succeeds, the first network device 712 initiates the request message 818 to the second network device 713, where the request message includes at least one of the identifier of the terminal or the MAC address of the terminal, includes the location information of the terminal device, and optionally, includes an authentication success indication. The authentication success indication indicates that the authentication of the terminal device on a current access technology side (that is, a non-3GPP access technology) succeeds. Further, it may indicate that the authentication for initial access succeeds, or it may indicate that re-authentication succeeds. For example, after the terminal device switches to the N3G AP, the re-authentication succeeds.

In some embodiments, the second network device 713 obtains, in response to the registration request 818 that is received from the first network device 712 (819) and that is used to register the terminal device connected to the non-3GPP-technology-based access point with the core network, the identifier or the MAC address of the terminal device 701 and the identifier of the non-3GPP access point from the registration request 818. In addition, if determining, based on the registration request, that the authentication on the terminal device 701 succeeds, the second network device 713 obtains subscription data of the terminal device 701 from the user data management function. Then, the second network device 713 generates a user context of the terminal device 701 based on the identifier or the MAC address of the terminal device 701, the identifier of the non-3GPP access point, and the subscription data of the terminal device 701. In some embodiments, the first network device 712 selects the corresponding second network device 713 based on the 5G-GUTI. In other words, the second network device 713 with which the terminal device 701 registers by using the 3GPP radio access technology.

Specifically, the second network device 713 determines, based on the authentication success indication or based on the request message 818 sent by the first network device 712, that the authentication on the terminal device 701 succeeds. For the terminal device 701 whose authentication succeeds, the second network device 713 stores at least one of the identifier or the MAC address of the terminal device, and the location information of the terminal device 701. In addition, the second network device 713 obtains the subscription data of the terminal device from the user data management function.

In some embodiments, the second network device 713 stores at least one of the identifier or the MAC address of the terminal device, the location information of the terminal device, and the subscription data of the terminal device. The foregoing information forms a user equipment context (820).

In some embodiments, the terminal device 701 sends a request message of establishing or updating a PDU session to a network device of the core network via a 3GPP technology access point side, where the message includes an indication of the non-3GPP access technology. In addition, the terminal device 701 receives a reply message for the message from the network device of the core network.

Specifically, the terminal device 701 sends the PDU session establishment or update request NAS message 822 at a 3GPP access side (821), where the message is carried in a NAS transmission message, and the NAS transmission message or the PDU session establishment or update request message includes the indication of the non-3GPP access technology, to indicate that a PDU session is established by using the non-3GPP access technology (for a newly established session), or indicate that the non-3GPP access technology is newly added to a PDU session (for a previously established session, a non-3GPP side session connection is newly added by using a session update procedure).

The second network device 713 forwards the PDU session establishment or update request NAS message 825 to the third network device 714 (824). In addition, the second network device 713 sends the location information of the terminal device 701 on the non-3GPP side to the third network device 714. If the NAS transmission message received by the second network device 713 carries the indication of the non-3GPP access technology, the second network device 713 sends the indication to the third network device 714. The third network device 714 selects a non-3GPP access device based on a service identifier, the indication of the non-3GPP access technology, and optionally, the non-3GPP location information. The non-3GPP access device is referred to as an original non-3GPP access device 103-2 for the newly established PDU session, and is referred to as a target non-3GPP access device 103-1 for the existing PDU session. For a PDU session update procedure, the third network device 714 establishes, based on the conventional technology, an N9 tunnel between the target non-3GPP access device 103-1 and the original non-3GPP access device 103-2 of the PDU session. For a PDU session establishment procedure, the third network device 714 sends a request message to the original non-3GPP access device 103-2, to establish a CP-UP session that is between the third network device 107 and the original non-3GPP access device.

For the PDU session update procedure, the third network device 714 sends a request message 832 to the target non-3GPP access device 130-1 (831), where the request message 832 includes the MAC address of the UE, and optionally, includes first indication information and/or third indication information. The first indication information indicates that there is no need to allocate a GTP-U tunnel identifier to the target non-3GPP access device 130-1, or indicate that there is no need to allocate a GTP-U tunnel identifier of an N3 interface. The third indication information indicates the target non-3GPP access device 130-1 to establish a correspondence between an N9 GTP-U tunnel and an L2 or L3 connection (an L2 or L3 connection between the N3G AP and the target non-3GPP access device). The N9 GTP-U tunnel is a GTP-U tunnel between the target non-3GPP access device 130-1 and the original non-3GPP access device 130-2. When the first indication information and the third indication information do not exist, the target non-3GPP access device 130-1 may alternatively determine the foregoing information by using the request message, in other words, learn, from a request message name, that there is no need to allocate the N3 GTP-U tunnel identifier, and establish a correspondence between an L2 or L3 connection and an N9 GTP-U tunnel.

The third network device 714 sends a NAS message of a PDU session establishment reply or a NAS message of a PDU session update instruction to the terminal device 701. Specifically, the NAS message 835 is first sent by the third network device 714 to the second network device 713 (834), and then sent by the second network device 713 to the terminal device 701 (837). The NAS message 838 includes routing information of a service flow, and optionally, includes the indication of the non-3GPP access technology. The routing information of the service flow includes a correspondence between description information of the service flow and an indication of an access technology, to indicate that transmission of the service flow is performed by using the access technology. The indication of the non-3GPP access technology indicates that the PDU session has a non-3GPP access side session connection.

The terminal device 701 sends a data packet of the service flow based on the routing information of the service flow by using a 3GPP access technology or the non-3GPP access technology. When transmission of the data packet is performed by using the non-3GPP access technology, the target non-3GPP access device 130-1 determines, based on the MAC address of the terminal device 701 or the IP address of the terminal device 701 that is carried in the data packet, an L2 or L3 connection corresponding to the data packet, and forwards the data packet to a corresponding N9 GTP-U tunnel based on a correspondence between the L2 or L3 connection and the N9 GTP-U tunnel. Alternatively, the target non-3GPP access device 130-1 directly sends the data packet to a service server. This is referred to as local routing. The transmission path is selected by the target non-3GPP access device 130-1 based on the description information of the service flow sent by the third network device and a routing policy. The routing policy includes an N9 GTP-U transmission indication or a local transmission indication, to indicate that transmission of the service flow corresponding to the description information of the service flow is performed by using the N9 GTP-U or the local routing (to be specific, the data packet is directly sent to the service server).

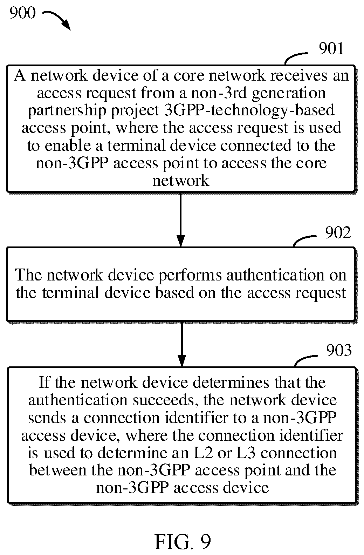

FIG. 9 is a flowchart of a communication method according to a possible implementation of this application.

In 901, a network device of a core network receives an access request from a non-3rd generation partnership project 3GPP-technology-based access point, where the access request is used to access a terminal device connected to the non-3GPP access point to the core network.

In 902, the network device performs authentication on the terminal device based on the access request.

In 903, if determining that the authentication succeeds, the network device sends a connection identifier to a non-3GPP access device, where the connection identifier is used to determine an L2 or L3 connection between the non-3GPP access point and the non-3GPP access device.

In some embodiments, the access request includes: an identifier of the terminal device, a medium access control MAC address of the terminal device, an identifier of the non-3GPP access point, and an extensible authentication protocol EAP message.

In some embodiments, that the network device performs authentication on the terminal device based on the access request includes: The network device selects, based on the identifier or the MAC address of the terminal device, an authentication server function AUSF associated with the terminal device; and the network device sends, to the AUSF, an authentication request including the EAP message.

In some embodiments, the method further includes: The network device selects, based on an identifier or a MAC address of the terminal device, a data management function associated with the terminal device; the network device sends a subscription data request to the data management function; and the network device receives subscription data of the terminal device from the data management function.

In some embodiments, the subscription data includes: the identifier of the terminal device, the MAC address of the terminal device, a service identifier of the terminal device, slice information associated with the terminal device, mobility information of the terminal device, power saving information of the terminal device, an identifier of the non-3GPP access device corresponding to a service of the terminal device, and policy information corresponding to the service of the terminal device.

In some embodiments, the method further includes: If determining that the subscription data does not include the identifier of the non-3GPP access device, the network device sends a query request to a network repository function of the core network, where the query request includes the service identifier of the terminal device; and the network device receives a reply from the network repository function, where the reply includes the identifier of the non-3GPP access device corresponding to the service identifier.

In some embodiments, the method further includes: If determining that the subscription data does not include the policy information or includes only partial policy information, the network device sends a query request to a policy control function of the core network, where the query request includes the service identifier of the terminal device; and the network device receives a reply from the policy control function, where the reply includes the policy information corresponding to the service identifier.

In some embodiments, the method further includes: The network device sends a session connection establishment request to the non-3GPP access device; and the network device receives a session establishment success indication from the non-3GPP access device.

In some embodiments, the method further includes: The network device determines, based on subscription data, a non-3GPP access device associated with the terminal device.

In some embodiments, the session connection establishment request includes: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; and second indication information, indicating the non-3GPP access device to establish a correspondence between a CP-UP session and an L2 or L3 connection that is between the non-3GPP access device and an access network device.

In some embodiments, the connection identifier is carried in at least one of the following: the description information of the service flow, the policy information corresponding to the service flow, and the second indication information.

In some embodiments, the network device is a first network device, and the method further includes: The first network device sends a registration request used for the terminal device to a second network device.

In some embodiments, the registration request includes: an identifier of the terminal device, a medium access control MAC address of the terminal device, an identifier of the access point, and an authentication success indication of the terminal device.

In some embodiments, the terminal device registers with the core network by using a 3GPP technology before accessing the core network via the non-3GPP access point.

In some embodiments, an authentication request includes a temporary identifier allocated to the terminal device during the registration.

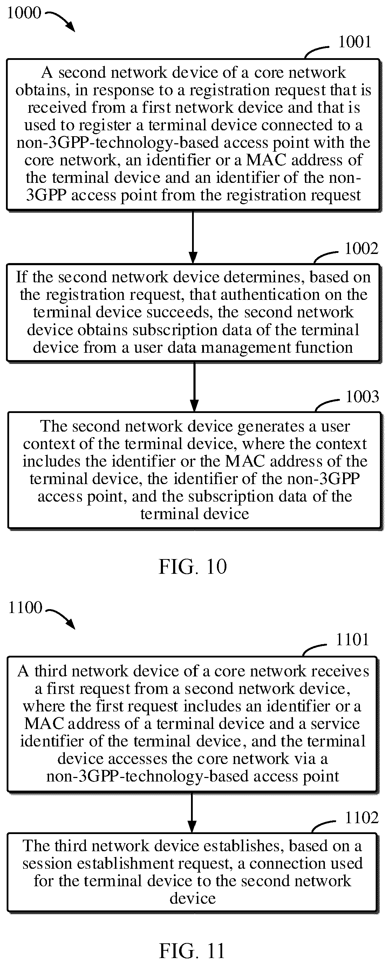

FIG. 10 is a flowchart of a communication method according to a possible implementation of this application.

In 1001, a second network device of a core network obtains, in response to a registration request that is received from a first network device and that is used to register a terminal device connected to a non-3GPP-technology-based access point with the core network, an identifier or a MAC address of the terminal device and an identifier of the non-3GPP access point from the registration request.

In 1002, if determining, based on the registration request, that authentication on the terminal device succeeds, the second network device obtains subscription data of the terminal device from a user data management function.

In 1103, the second network device generates a user context of the terminal device, where the context includes the identifier or the MAC address of the terminal device, the identifier of the non-3GPP access point, and the subscription data of the terminal device.

In some embodiments, the method further includes: The second network device sends a first request to a third network device; and the third network device establishes a session based on the first request.

In some embodiments, the method further includes: The second network device receives a protocol data unit (PDU) session establishment or update request from a 3rd generation partnership project 3GPP technology access point, where the PDU session establishment or update request includes an indication of a non-3GPP access technology; the second network device sends the PDU session establishment or update request to the third network device by using the first request; and the third network device establishes the session based on the PDU session establishment or update request.

FIG. 11 is a flowchart of a communication method according to a possible implementation of this application.

In 1101, a third network device of a core network receives a first request from a second network device, where the first request includes an identifier or a MAC address of a terminal device and a service identifier of the terminal device, and the terminal device accesses the core network via a non-3GPP-technology-based access point.

In 1102, the third network device establishes, based on a session establishment request, a connection used for the terminal device to the second network device.

In some embodiments, the method further includes: The third network device establishes a session connection used for the terminal device to a non-3GPP access device.

In some embodiments, that the third network device establishes a session connection to a non-3GPP access device includes: The third network device sends a session connection establishment request to the non-3GPP access device; and the third network device receives a session establishment success indication from the non-3GPP access device.

In some embodiments, the session connection establishment request includes at least one of the following: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; second indication information, indicating the non-3GPP access device to establish a correspondence between a CP-UP session and an L2 or L3 connection that is between the non-3GPP access device and an access network device; and third indication information, indicating the non-3GPP access device to establish a correspondence between the L2 or L3 connection that is between the non-3GPP access device and the access network device and a user plane tunnel session that is between the non-3GPP access device and an original non-3GPP access device.

In some embodiments, the method further includes: The third network device sends a connection identifier to the non-3GPP access device, where the connection identifier is used to determine an L2 or L3 connection between the non-3GPP access point and the non-3GPP access device, and the connection identifier is carried in at least one of the following: the description information of the service flow, the policy information corresponding to the service flow, the second indication information, and the third indication information.

In some embodiments, the method further includes: The third network device receives a PDU session establishment or update request message from the second network device; and the third network device establishes or updates a PDU session based on the message.

In some embodiments, that the third network device establishes or updates a PDU session based on the message includes: The third network device selects a non-3GPP access device; the third network device creates a session connection to the non-3GPP access device; and the third network device sends a reply message for the message.

In some embodiments, that the third network device creates a session connection to the non-3GPP access device includes: When the message indicates to update the PDU session, the third network device establishes a tunnel connection between a target non-3GPP access device and an original non-3GPP access device of the PDU session; and when the message indicates to establish a new PDU session, the third network device establishes a session connection between an access point/access control (AP/AC) and the target non-3GPP access device.

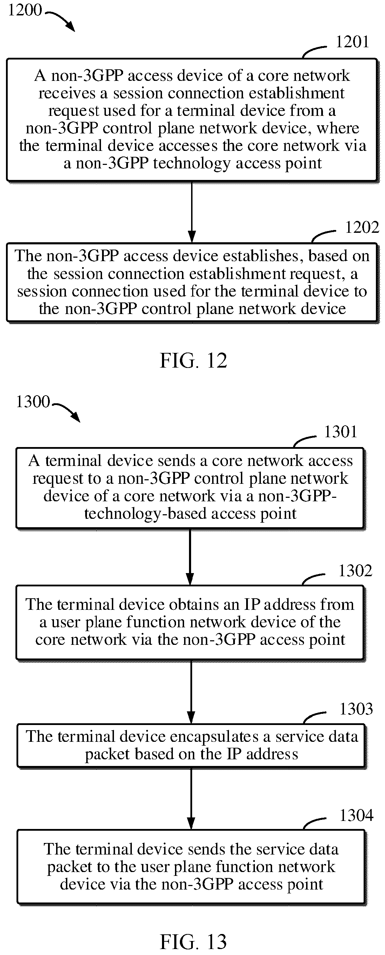

FIG. 12 is a flowchart of a communication method according to a possible implementation of this application.

In 1201, a non-3GPP control plane network device of a core network receives a session connection establishment request used for a terminal device from a non-3GPP access device, where the terminal device accesses the core network via a non-3GPP technology access point.

In 1202, the non-3GPP access device establishes, based on the session connection establishment request, a session connection used for the terminal device to the non-3GPP control plane network device.

In some embodiments, the session is in one-to-one correspondence with the terminal device or in one-to-one correspondence with a service identifier.

In some embodiments, the session connection establishment request includes: description information of a service flow; policy information corresponding to the service flow; first indication information, indicating that there is no need to allocate a GPRS tunneling protocol-U (GTP-U) tunnel identifier to the non-3GPP access device, or indicating that there is no need to allocate a GTP-U tunnel identifier of an N3 interface to the non-3GPP access device; second indication information, indicating the non-3GPP access device to establish a correspondence between a CP-UP session and an L2 or L3 connection that is between the non-3GPP access device and an access network device; and third indication information, indicating the non-3GPP access device to establish a correspondence between the L2 or L3 connection that is between the non-3GPP access device and the access network device and a user plane tunnel session that is between the non-3GPP access device and an original non-3GPP access device.

In some embodiments, when the first indication information and the second indication information do not exist, the non-3GPP access device determines, based on a request, that there is no need to allocate the GTP-U tunnel identifier to the non-3GPP access device, or determines, based on a request, the correspondence between the CP-UP session and the L2 or L3 connection that is between the non-3GPP access device and the access network device and.

In some embodiments, when the first indication information and the third indication information do not exist, the non-3GPP access device determines, based on a request, that there is no need to allocate the GTP-U tunnel identifier to the non-3GPP access device, or determines, based on a request, the correspondence between the L2 or L3 connection that is between the non-3GPP access device and the access network device and the user plane tunnel session that is between the non-3GPP access device and the original non-3GPP access device.

In some embodiments, the method further includes: The non-3GPP access device receives a connection identifier from the non-3GPP control plane network device, where the connection identifier is used to determine an L2 or L3 connection between the non-3GPP access point and the non-3GPP access device, and the connection identifier is carried in at least one of the following: the description information of the service flow, the policy information corresponding to the service flow, the second indication information, and the third indication information.

FIG. 13 is a flowchart of a communication method according to a possible implementation of this application.

In 1301, a terminal device sends a core network access request to a non-3GPP control plane network device of a core network via a non-3GPP-technology-based access point.

In 1302, the terminal device obtains an IP address from a user plane function network device of the core network via the non-3GPP access point.

In 1303, the terminal device encapsulates a service data packet based on the IP address.

In 1304, the terminal device sends the service data packet to the user plane function network device via the non-3GPP access point.

In some embodiments, the request includes: an identifier of the terminal device, a medium access control MAC address of the terminal device, an identifier of the access point, and an extensible authentication protocol EAP message.

In some embodiments, the terminal device is user equipment UE that supports 3GPP technology access.

In some embodiments, the method further includes: The UE sends a PDU session establishment or update request message to a network device of the core network via a 3GPP technology access side, where the message includes an indication of a non-3GPP access technology; and the UE receives a reply message for the message from the network device of the core network.

In some embodiments, the method further includes that the terminal device sends the service data packet includes: The terminal device sends the service data packet from a 3GPP technology access side; or the terminal device sends the service data packet from a non-3GPP technology access side.

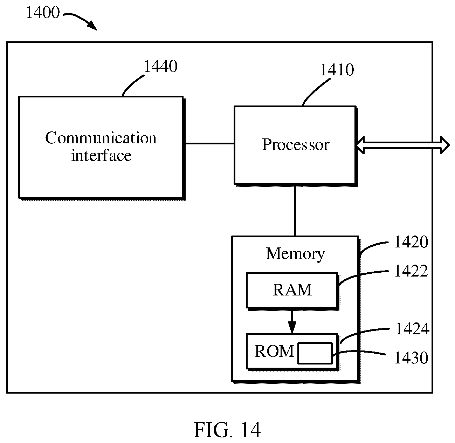

FIG. 14 is a simplified block diagram of an example device 1400 suitable for implementing a possible implementation of this application. The device 1400 may be configured to implement the network device 104 shown in FIG. 1, the network device 305 shown in FIG. 3, the network devices 505, 512, 513, and 514 shown in FIG. 5, and the network devices 705, 712, 713, and 714 shown in FIG. 7. As shown in the figure, the device 1400 includes one or more processors (or processing units) 1410, may further include one or more memories 1420 coupled to the processor 1410, and may further include a communication interface 1440 coupled to the processor 1410.

The communication interface 1440 may be configured to communicate with another device or apparatus, for example, send or receive data and/or a signal. The communication interface 1440 may have at least one communication interface for communication. The communication interface may include any interface necessary for communicating with another device. For example, the communication interface may be a transceiver, a circuit, a bus, a module, or another type of communication interface.

The processor 1410 may include but is not limited to at least one of the following: one or more of a general-purpose computer, a dedicated computer, a microcontroller, a digital signal processor (Digital Signal Processor, DSP), or a controller-based multi-core controller architecture. The device 1400 may have a plurality of processors, such as application-specific integrated circuit chips, and the device 1400 in time belongs to a clock synchronized with a main processor.

The memory 1420 may include one or more non-volatile memories and one or more volatile memories. An example of the non-volatile memory includes but is not limited to at least one of the following: a read-only memory (Read-Only-Memory, ROM) 1424, an erasable programmable read-only memory (Electrically Programmable Read-Only-Memory, EPROM), a flash memory, a hard disk, a compact disc (Compact Disc, CD), a digital video disk (Digital Video Disk, DVD), or another magnetic storage and/or optical storage. An example of the volatile memory includes but is not limited to at least one of the following: a random access memory (Random Access Memory, RAM) 1422, or another volatile memory that does not persist during power-off duration.

A computer program 1430 includes computer-executable instructions executed by an associated processor 1410. The program 1430 may be stored in the ROM 1420. The processor 1410 may perform any proper action and processing by loading the program 1430 into the RAM 1420.

A possible implementation of this application may be implemented by using the program 1430, so that the device 1400 can perform any process discussed with reference to FIG. 2, FIG. 4, FIG. 6A and FIG. 6B, and FIG. 8A and FIG. 8B. A possible implementation of this application may alternatively be implemented by using hardware or a combination of software and hardware.

In some implementations, the program 1430 may be tangibly included in a computer-readable medium, and the computer-readable medium may be included in the device 1400 (for example, in the memory 1420) or another storage device that can be accessed by the device 1400. The program 1430 may be loaded from the computer-readable medium into the RAM 1422 for execution. The computer-readable medium may include any type of tangible non-volatile memory, for example, a ROM, an EPROM, a flash memory, a hard disk, a CD, a DVD, or the like.

It should be noted that the foregoing embodiments are some implementations provided in this application, and are merely intended to describe the technical solutions of this application more clearly, but do not constitute any limitation on other embodiments of this application. In another embodiment, more or fewer procedures or steps, more or fewer components, more or fewer service functions, different scheduling policies, and the like may be further included. This is not limited herein. A person of ordinary skill in the art may learn that, with evolution of a network architecture and emergence of a new service scenario, the technical solutions provided in this application are also applicable to resolving similar technical problems.

An embodiment of this application further provides a chip. The chip may include an input interface, an output interface, and a processing circuit. In this embodiment of this disclosure, the input interface and the output interface may complete signaling or data interaction, and the processing circuit may complete generation and processing of signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer-readable storage medium, where the computer-readable storage medium stores computer instructions or program code. When a processor runs the instructions or the program code, the processor is enabled to perform the method and the function in any one of the foregoing embodiments. The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. The computer-readable storage medium may be any usable medium accessible by a computer, or a data storage device, such as a server or a data center, integrating one or more usable media. More detailed examples of the computer-readable storage medium include an electrical connection with one or more wires, a magnetic medium (for example, a magnetic disk, a floppy disk, a hard disk, a magnetic tape, or a magnetic storage device), an optical medium (for example, an optical storage device or a DVD), a semiconductor medium (for example, a solid state drive), a random access memory (RAM), a read-only memory (ROM), an erasable programmable read-only memory (EPROM or flash memory), or any suitable combination thereof.

All or some of the foregoing embodiments may be implemented by using software, hardware, firmware, or any combination thereof. When software is used to implement embodiments, all or some embodiments may be implemented in a form of a computer program product. Embodiments of this application further provide at least one computer program product that is tangibly stored on a non-transitory computer-readable storage medium. The computer program product includes one or more computer-executable instructions, for example, instructions included in a program module, and the instructions are executed in a device on a target real or virtual processor, to perform the process, the method, and the function in any one of the foregoing embodiments. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner.

According to the methods provided in embodiments of this application, this application further provides a computer program product. The computer program product includes computer program code. When the computer program code is run on a computer, the computer is enabled to perform a process, a method, and a function in the foregoing embodiments. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed completely on the computer, partially on the computer, as an independent software package, partially on the computer and partially on a remote computer, or completely on the remote computer or server. In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other computing devices, or a combination thereof.

The foregoing has described various implementations of this disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

In the foregoing specific implementations, the objectives, the technical solutions, and the beneficial effects of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined to achieve different technical effect. Various combinations are not listed in embodiments of this application.

In addition, although the operations of the method in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining... ", "when (a stated condition or event) is detected", or "in response to detecting (a stated condition or event)".

## Claims

1. A communication method, comprising:
receiving, by a network device of a core network, an access request from a non-3rd generation partnership project 3GPP-technology-based access point, wherein the access request is used to enable a terminal device connected to the non-3GPP access point to access the core network;
performing, by the network device, authentication on the terminal device based on the access request; and
if determining that the authentication succeeds, sending, by the network device, a connection identifier to a non-3GPP access device, wherein the connection identifier is used to determine an L2 or L3 connection between the non-3GPP access point and the non-3GPP access device.

2. The method according to claim 1, wherein the access request comprises at least one of the following:
an identifier of the terminal device;
a medium access control MAC address of the terminal device;
an identifier of the non-3GPP access point; and
an extensible authentication protocol EAP message.

3. The method according to claim 3, wherein the performing authentication on the terminal device based on the access request comprises:
selecting, by the network device based on the identifier or the MAC address of the terminal device, an authentication server function AUSF associated with the terminal device; and
sending, by the network device to the AUSF, an authentication request comprising the EAP message.

4. The method according to claim 1, further comprising:
selecting, by the network device based on an identifier or a MAC address of the terminal device, a data management function associated with the terminal device;
sending, by the network device, a subscription data request to the data management function; and
receiving, by the network device, subscription data of the terminal device from the data management function.

5. The method according to claim 4, wherein the subscription data comprises at least one of the following:
the identifier of the terminal device;
the MAC address of the terminal device;
a service identifier of the terminal device;
slice information associated with the terminal device;
mobility information of the terminal device;
power saving information of the terminal device;
an identifier of the non-3GPP access device corresponding to a service of the terminal device; and
policy information corresponding to the service of the terminal device.

6. The method according to claim 5, further comprising:
if determining that the subscription data does not comprise the identifier of the non-3GPP access device, sending, by the network device, a query request to a network repository function of the core network, wherein the query request comprises the service identifier of the terminal device; and
receiving, by the network device, a reply from the network repository function, wherein the reply comprises the identifier of the non-3GPP access device corresponding to the service identifier.

7. The method according to claim 5, further comprising:
if determining that the subscription data does not comprise the policy information or comprises only partial policy information, sending, by the network device, a query request to a policy control function of the core network, wherein the query request comprises the service identifier of the terminal device; and
receiving, by the network device, a reply from the policy control function, wherein the reply comprises the policy information corresponding to the service identifier.

8. The method according to claim 1, further comprising:
sending, by the network device, a session connection establishment request to the non-3GPP access device; and
receiving, by the network device, a session establishment success indication from the non-3GPP access device.

9. The method according to claim 8, further comprising:
determining, by the network device based on subscription data, a non-3GPP access device associated with the terminal device.

10. The method according to claim 8, wherein the session connection establishment request comprises at least one of the following:
description information of a service flow;
policy information corresponding to the service flow;
first indication information, indicating that there is no need to allocate a GPRS tunneling protocol-U (GTP-U) tunnel identifier to the non-3GPP access device, or indicating that there is no need to allocate the GTP-U tunnel identifier of an N3 interface to the non-3GPP access device; and
second indication information, indicating the non-3GPP access device to establish a correspondence between a control plane-user plane (CP-UP) session and an L2 or L3 connection that is between the non-3GPP access device and an access network device.

11. The method according to claim 10, wherein the connection identifier is carried in at least one of the following:
the description information of the service flow;
the policy information corresponding to the service flow; and
the second indication information.

12. The method according to claim 1, wherein the network device is a first network device, and the method further comprises:
sending, by the first network device, a registration request used for the terminal device to a second network device.

13. The method according to claim 12, wherein the registration request comprises at least one of the following:
an identifier of the terminal device;
a medium access control MAC address of the terminal device;
an identifier of the access point; and
an authentication success indication of the terminal device.

14. The method according to claim 11, wherein the terminal device registers with the core network by using a 3GPP technology before accessing the core network via the non-3GPP access point.

15. The method according to claim 14, wherein the authentication request comprises a temporary identifier allocated to the terminal device during the registration.

16. A communication method, comprising:
obtaining, by a second network device of a core network in response to a registration request that is received from a first network device and that is used to register a terminal device connected to a non-3GPP-technology-based access point with the core network, an identifier or a MAC address of the terminal device and an identifier of the non-3GPP access point from the registration request;
if determining, based on the registration request, that authentication on the terminal device succeeds, obtaining, by the second network device, subscription data of the terminal device from a user data management function; and
generating, by the second network device, a user context of the terminal device, wherein the context comprises the identifier or the MAC address of the terminal device, the identifier of the non-3GPP access point, and the subscription data of the terminal device.

17. The method according to claim 16, further comprising:
sending, by the second network device, a first request to a third network device; and
establishing, by the third network device, a session based on the first request.

18. The method according to claim 17, further comprising:
receiving, by the second network device, a protocol data unit (PDU) session establishment or update request from a 3rd generation partnership project 3GPP technology access point, wherein the PDU session establishment or update request comprises an indication of a non-3GPP access technology;
sending, by the second network device, the PDU session establishment or update request to the third network device by using the first request; and
establishing, by the third network device, a session based on the PDU session establishment or update request.

19. A communication method, comprising:
receiving, by a third network device of a core network, a first request from a second network device, wherein the first request comprises an identifier or a MAC address of a terminal device and a service identifier of the terminal device, and the terminal device accesses the core network via a non-3GPP-technology-based access point; and
establishing, by the third network device based on the first request, a connection used for the terminal device to the second network device.

20. The method according to claim 19, further comprising:
establishing, by the third network device, a session connection used for the terminal device to a non-3GPP access device.

21. The method according to claim 20, wherein the establishing, by the third network device, a session connection to a non-3GPP access device comprises:
sending, by the third network device, a session connection establishment request to the non-3GPP access device; and
receiving, by the third network device, a session establishment success indication from the non-3GPP access device.

22. The method according to claim 21, wherein the session connection establishment request comprises at least one of the following:
description information of a service flow;
policy information corresponding to the service flow;
first indication information, indicating that there is no need to allocate a GPRS tunneling protocol-U (GTP-U) tunnel identifier to the non-3GPP access device, or indicating that there is no need to allocate the GTP-U tunnel identifier of an N3 interface to the non-3GPP access device;
second indication information, indicating the non-3GPP access device to establish a correspondence between a control plane-user plane (CP-UP) session and an L2 or L3 connection that is between the non-3GPP access device and an access network device; and
third indication information, indicating the non-3GPP access device to establish a correspondence between the L2 or L3 connection that is between the non-3GPP access device and the access network device and a user plane tunnel session that is between the non-3GPP access device and an original non-3GPP access device.

23. The method according to claim 22, further comprising:
sending, by the third network device, a connection identifier to the non-3GPP access device, wherein the connection identifier is used to determine an L2 or L3 connection between the non-3GPP access point and the non-3GPP access device, and the connection identifier is carried in at least one of the following:
the description information of the service flow;
the policy information corresponding to the service flow;
the second indication information; and
the third indication information.

24. The method according to claim 21, further comprising:
receiving, by the third network device, a PDU session establishment or update request message from the second network device; and
establishing or updating, by the third network device, a PDU session based on the message.

25. The method according to claim 24, wherein the establishing or updating, by the third network device, a PDU session based on the message comprises:
selecting, by the third network device, a non-3GPP access device;
creating, by the third network device, a session connection to the non-3GPP access device; and
sending, by the third network device, a reply message for the message.

26. The method according to claim 25, wherein the creating, by the third network device, a session connection to the non-3GPP access device comprises:
when the message indicates to update the PDU session, establishing, by the third network device, a tunnel connection between a target non-3GPP access device and an original non-3GPP access device of the PDU session; and
when the message indicates to establish a new PDU session, establishing, by the third network device, a session connection between an access point/access control (AP/AC) and the target non-3GPP access device.

27. A communication method, comprising:
receiving, by a non-3GPP control plane network device of a core network, a session connection establishment request used for a terminal device from a non-3GPP access device, wherein the terminal device accesses the core network via a non-3GPP technology access point; and
establishing, by the non-3GPP access device based on the session connection establishment request, a session connection used for the terminal device to the non-3GPP control plane device.

28. The method according to claim 27, wherein the session is in one-to-one correspondence with the terminal device or in one-to-one correspondence with a service identifier.

29. The method according to claim 27, wherein the session connection establishment request comprises at least one of the following:
description information of a service flow;
policy information corresponding to the service flow;
first indication information, indicating that there is no need to allocate a GPRS tunneling protocol-U (GTP-U) tunnel identifier to the non-3GPP access device, or indicating that there is no need to allocate the GTP-U tunnel identifier of an N3 interface to the non-3GPP access device;
second indication information, indicating the non-3GPP access device to establish a correspondence between a control plane-user plane (CP-UP) session and an L2 or L3 connection that is between the non-3GPP access device and an access network device; and
third indication information, indicating the non-3GPP access device to establish a correspondence between the L2 or L3 connection that is between the non-3GPP access device and the access network device and a user plane tunnel session that is between the non-3GPP access device and an original non-3GPP access device.

30. The method according to claim 29, wherein when the first indication information and the second indication information do not exist, the non-3GPP access device determines, based on arequest, that there is no need to allocate the GTP-U tunnel identifier to the non-3GPP access device, or determines, based on a request, the correspondence between the CP-UP session and the L2 or L3 connection that is between the non-3GPP access device and the access network device.

31. The method according to claim 29, wherein when the first indication information and the third indication information do not exist, the non-3GPP access device determines, based on a request, that there is no need to allocate the GTP-U tunnel identifier to the non-3GPP access device, or determines, based on a request, the correspondence between the L2 or L3 connection that is between the non-3GPP access device and the access network device and the user plane tunnel session that is between the non-3GPP access device and the original non-3GPP access device.

32. The method according to claim 29, further comprising:
receiving, by the non-3GPP access device, a connection identifier from the non-3GPP control plane network device, wherein the connection identifier is used to determine an L2 or L3 connection between the non-3GPP access point and the non-3GPP access device, and the connection identifier is carried in at least one of the following:
the description information of the service flow;
the policy information corresponding to the service flow;
the second indication information; and
the third indication information.

33. A communication method, comprising:
sending, by a terminal device, a core network access request to a non-3GPP control plane network device of a core network via a non-3GPP-technology-based access point;
obtaining, by the terminal device, an IP address from a user plane function network device of the core network via the non-3GPP access point;
encapsulating, by the terminal device, a service data packet based on the IP address; and
sending, by the terminal device, the service data packet to the user plane function network device via the non-3GPP access point.

34. The method according to claim 33, wherein the request comprises at least one of the following:
an identifier of the terminal device;
a medium access control MAC address of the terminal device;
an identifier of the access point; and
an extensible authentication protocol EAP message.

35. The method according to claim 33, wherein the terminal device is user equipment UE that supports 3GPP technology access.

36. The method according to claim 35, further comprising:
sending, by the UE, a PDU session establishment or update request message to a network device of the core network via a 3GPP technology access side, wherein the message comprises an indication of a non-3GPP access technology; and
receiving, by the UE, a reply message for the message from the network device of the core network.

37. The method according to claim 33, wherein the sending, by the terminal device, the service data packet comprises:
sending, by the terminal device, the service data packet from a 3GPP technology access side; or
sending, by the terminal device, the service data packet from a non-3GPP technology access side.

38. A communication system, comprising an authentication network element, a registration management network element, and a session management network element, wherein
the authentication network element receives an access request from a non-3rd generation partnership project 3GPP-technology-based access point, wherein the access request is used to access a terminal device connected to the non-3GPP access point to the core network;
the authentication network element performs authentication on the terminal device based on the access request, and if the authentication network element determines that the authentication succeeds, the session management network element sends a connection identifier to a non-3GPP access device, wherein the connection identifier is used to determine an L2 or L3 connection between the non-3GPP access point and the non-3GPP access device; and
the authentication server function network element, the registration management function network element, and the session management function network element are deployed in different network elements or deployed in a same network element.

39. The system according to claim 38, wherein
the authentication network element sends a registration request to the registration management network element;
the registration management network element determines, based on the registration request, that the authentication succeeds;
the registration management network element obtains subscription data of the terminal device from a user data management network element;
the registration management network element establishes a connection to the session management network element; and
the session management network element establishes a session connection to the non-3GPP access device.

40. The system according to claim 39, wherein the subscription data comprises at least one of the following:
an identifier of the terminal device;
a MAC address of the terminal device;
a service identifier of the terminal device;
slice information associated with the terminal device;
mobility information of the terminal device;
power saving information of the terminal device;
an identifier of the non-3GPP access device corresponding to a service of the terminal device; and
policy information corresponding to the service of the terminal device.

41. The system according to claim 39, wherein that the session management network element establishes a session connection to the non-3GPP access device comprises:
the session management network element sends a session connection establishment request to the non-3GPP access device; and
the session management network element receives a session establishment success indication from the non-3GPP access device.

42. The system according to claim 41, wherein the session connection establishment request comprises at least one of the following:
description information of a service flow;
policy information corresponding to the service flow;
first indication information, indicating that there is no need to allocate a GPRS tunneling protocol-U (GTP-U) tunnel identifier to the non-3GPP access device, or indicating that there is no need to allocate the GTP-U tunnel identifier of an N3 interface to the non-3GPP access device;
second indication information, indicating the non-3GPP access device to establish a correspondence between a control plane-user plane (CP-UP) session and an L2 or L3 connection that is between the non-3GPP access device and an access network device; and
third indication information, indicating the non-3GPP access device to establish a correspondence between the L2 or L3 connection that is between the non-3GPP access device and the access network device and a user plane tunnel session that is between the non-3GPP access device and an original non-3GPP access device.

43. The system according to claim 41, wherein
the session management network element sends the connection identifier to the non-3GPP access device, wherein the connection identifier is used to determine the L2 or L3 connection between the non-3GPP access point and the non-3GPP access device, and the connection identifier is carried in at least one of the following:
the description information of the service flow;
the policy information corresponding to the service flow;
the second indication information; and
the third indication information.

44. A communication apparatus, comprising:
at least one processor; and
at least one memory, wherein the at least one memory is coupled to the at least one processor and stores instructions for execution by the at least one processor, wherein when the instructions are executed by the at least one processor, the communication apparatus is enabled to implement the method according to any one of claims 1 to 15, 16 to 18, 19 to 26, 27 to 32, and 33 to 37.

45. A computer-readable storage medium, wherein the computer-readable storage medium stores instructions, and when the instructions are executed by an electronic device, the electronic device is enabled to perform the method according to any one of claims 1 to 35.

46. A computer program product, wherein the computer program product comprises instructions, and when the instructions are executed by an electronic device, the electronic device is enabled to perform the method according to any one of claims 1 to 37.
